(19) Europäisches Patentamt
European Patent Office
Office européen des brevets

(11) **EP 3 248 566 B1**

(12) **EUROPÄISCHE PATENTSCHRIFT**

(45) Veröffentlichungstag und Bekanntmachung des Hinweises auf die Patenterteilung:
**30.11.2022   Patentblatt 2022/48**

(21) Anmeldenummer: **17157582.2**

(22) Anmeldetag: **28.10.2009**

(51) Internationale Patentklassifikation (IPC):
***A61C 8/00*** *(2006.01)*

(52) Gemeinsame Patentklassifikation (CPC):
**A61C 8/005; A61C 8/0066**

(54) **AUFBAUTEIL FÜR EIN DENTALIMPLANTAT, PFOSTENTEIL FÜR EIN DENTALIMPLANTAT SOWIE DENTALIMPLANTAT**

ABUTMENT FOR A DENTAL IMPLANT, POST PART FOR A DENTAL IMPLANT AND DENTAL IMPLANT

PILIER POUR UN IMPLANT DENTAIRE, PARTIE DE TIGE POUR UN IMPLANT DENTAIRE ET IMPLANT DENTAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **31.10.2008   DE 102008054138**

(43) Veröffentlichungstag der Anmeldung:
**29.11.2017   Patentblatt 2017/48**

(62) Dokumentnummer(n) der früheren Anmeldung(en) nach Art. 76 EPÜ:
**09763828.2 / 2 344 063**

(73) Patentinhaber: **Nobel Biocare Services AG 8302 Kloten (CH)**

(72) Erfinder: **Zipprich, Holger 64342 Malchen (DE)**

(74) Vertreter: **Tergau & Walkenhorst Patentanwälte PartGmbB Lurgiallee 12 60439 Frankfurt am Main (DE)**

(56) Entgegenhaltungen:
**DE-A1-102005 008 273     DE-A1-102006 018 726 US-A- 5 437 551**

EP 3 248 566 B1

**Beschreibung**

Die Erfindung bezieht sich auf ein Aufbauteil für ein Dentalimplantat. Sie betrifft weiter ein ein ein solches Aufbauteil umfassendes Dentalimplantat.

Dentalimplantate sind in vielfältigen Formen bekannt. Sie werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das Pfostenteil üblicherweise durch Einschrauben an der vorgesehen Stelle in den Kieferknochen eingesetzt wird. Das Pfostenteil weist dabei in der Regel am apikalen Ende ein zumeist selbstschneidendes Schraubengewinde auf, mit welchem das Pfostenteil in das entsprechend präparierte Implantatbett eingesetzt wird.

Ein derartiges Dentalimplantat ist üblicherweise grundsätzlich zweiteilig aufgebaut und umfasst das zur Einbringung in den Kieferknochen vorgesehene Pfostenteil und ein zugeordnetes Aufbauteil, an das das als Prothese oder dergleichen vorgesehene Zahnersatzstück anbringbar ist. Das Pfostenteil und ebenso das Kopf- oder Aufbauteil bestehen üblicherweise aus Metall oder einer Keramik, und zwar insbesondere aus Titan, Zirkon, einer Titanlegierung, Zirkonlegierung, einer titanhaltigen Legierung, einer zirkonhaltigen Legierung, einer Zirkonoxid-Aluminiumoxid-Keramik oder einer Keramik, die entweder Zirkonoxid oder Aluminiumoxid beinhaltet oder mindestens eine der Keramiken als Hauptbestandteil aufweist. Darüber hinaus können Keramiken eingesetzt werden, die auf Silizium- oder Siliziumoxidbasis aufgebaut sind und z. B. Stickstoff, Wasserstoff, Kohlenstoff oder Wolfram beinhalten. Das Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Pfostenteils vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Das Aufbauteil, das üblicherweise an seinem oberen Bereich mit einer Krone, einer anderen prothetischen Versorgung oder dergleichen in an sich bekannter Weise ausgestattet wird, ist üblicherweise über eine geeignet gewählte Verbindungsschraube mit dem Pfostenteil verschraubt. Bei der Einbringung wird dabei üblicherweise das Gewinde der Verbindungsschraube in ein zugeordnetes Innengewinde des Pfostenteils eingeschraubt. Der Schraubenkopf der Verbindungsschraube presst dabei beim Einschrauben über eine Stirnsenkung des Aufbauteils dieses auf das Pfostenteil. Das Aufbauteil kann aber auch in das Pfostenteil eingepresst werden und lediglich über eine Verklemmung fixiert werden, oder durch eine Zementierung/Verklebung fixiert werden.

Zur Stabilisierung dieser Anordnung ist üblicherweise am Aufbauteil ein Kontaktstift angeformt, der formschlüssig in eine zugeordnete Formausnehmung im Pfostenteil einbringbar ist. Damit kann das Aufbauteil über den Kontaktstift in die Formausnehmung im Pfostenteil eingesteckt werden, wobei anschließend üblicherweise die mechanische Fixierung über das Anziehen der Verbindungsschraube erfolgt. Selbstverständlich kann stattdessen auch in der Art einer umgekehrten Anordnung der Kontaktstift auch am Pfostenteil angeformt und die Formausnehmung im Aufbauteil angebracht sein. Die nachfolgenden Ausführungen beziehen sich auf die weiter verbreitete Variante, bei der der Kontaktstift am Aufbauteil und die Formausnehmung im Pfostenteil eingebracht ist; der Gegenstand der Erfindung umfasst selbstverständlich aber auch die entsprechende andere Variante in umgekehrter Anordnung, bei der der Kontaktstift am Pfostenteil und die Formausnehmung im Aufbauteil angeordnet sind.

Im Hinblick auf die bei der Kaubelastung auftretenden Kräfte und die gewünschte Langlebigkeit bei der Verwendung eines derartigen Dentalimplantats ist die mechanische Stabilität der Anordnung gegenüber verschiedenartigen Belastungen von besonderer Bedeutung. Insbesondere soll dabei in der Regel auch einer Rotation oder Verdrehung zwischen dem Aufbauteil und dem Pfostenteil durch äußere Kräfte, meist bedingt durch die Kaubelastung, entgegengewirkt werden. Dazu wird üblicherweise eine mechanische Indizierung in Form einer mechanischen Sperre verwendet, oder es wird die Flächenpressung zwischen dem Aufbauteil und dem Pfostenteil geeignet gewählt. Zur Indizierung und zur Vermeidung der Rotation des Aufbauteils auf dem Pfostenteil kann insbesondere eine geeignete Konturierung des Querschnitts des Kontaktstifts einerseits und der diesem zugeordneten Formausnehmung andererseits vorgesehen sein, um die genannte mechanische Sperre zu bilden. Üblicherweise sind dazu der Kontaktstift und dementsprechend auch die Formausnehmung im Querschnitt sechskantförmig ausgeführt. Alternativ sind aber auch Ausführungen als Torks oder so genannte Vielzahlsysteme mit variierender Elementanzahl und variierender Geometrie bekannt.

Abhängig von der Einbringstelle des Dentalimplantats (Frontzahn-, Seitenzahnbereich, Unterkiefer, Oberkiefer), der Knochensubstanz, der Restbezahnung, Verlauf und Position der Gefäße und Nerven ist es dem Behandler jedoch nicht immer möglich, die Bohrung für das Pfostenteil oder Implantat übereinstimmend mit der Achse der vorgesehenen prothetischen Versorgung, also insbesondere der Krone oder dergleichen, zu bohren. Dementsprechend ist es möglich, dass ein gerade oder linear ausgeführtes oder ausgerichtetes Pfostenteil oder Implantat und/oder ein gerade oder linear ausgeführtes Aufbauteil nicht den anatomischen Erfordernissen des Patienten und seiner Behandlung genügen. Um diesem Problem entgegenzuwirken, werden bedarfsweise auch abgewinkelte oder so genannte angulierte Aufbauteile verwendet.

Der in diesem Zusammenhang üblicherweise vorgesehen Knickwinkel liegt in der Regel in einem Bereich zwischen 10° und 30°, kann aber auch bis zu 45°- 60° betragen. Nach der Einbringung des Implantats, vorzugsweise nach der Einheilung der Pfostenteile, müssen bei derartigen Systemen zur Anfertigung der Krone, der Brücke oder anderer Prothesen die räumlichen und geometrischen Informationen der Restbezahnung (beispielsweise Antagonisten, mesial und distal der Insertionsstelle stehende Zähne), der Schleimhaut und des Pfostenteils oder Implantats oder des montierten Aufbauteils erfasst werden. Diese räumlichen und geometrischen Informationen sind notwendig, um die Krone, Brücke oder dergleichen passgenau und anatomisch optimiert zu fertigen. Zu diesem Zweck wird üblicherweise eine Abformung, vorzugsweise aus Silikon oder einem anderen dentalen Abformmaterial, von der Mundsituation angefertigt. Diese Abformung wird vorzugsweise mit Gips oder einem anderen dentalen Modellwerkstoff ausgegossen. Dieses Gipsmodell ist somit ein Duplikat der Mundsituation des Patienten/der Patientin. Es liefert dem Zahnarzt und/oder dem Zahntechniker die Informationen über die Position der Restbezahnung, der Schleimhaut und des inserierten Pfostenteils oder Implantats.

Zur Verbesserung der Übertragung von Position und Geometrie der inserierten Pfostenteile oder Implantate werden vorzugsweise spezielle Abformpfosten aus Metall und/oder Kunststoff auf die inserierten Pfostenteile oder Implantate gesteckt und/oder geschraubt. Anschließend wird die Abformung im Mund vorzugsweise mit Silikon angefertigt. Nach der Aushärtung des Abformmaterials verbleibt der Abformpfosten bei der Abdruckentnahme entweder auf dem Implantat oder wird mit der Abformung entnommen. Beim Ausgießen der Abformung muss der Abformpfosten oder Aufbaupfosten in der Abformung platziert werden und mit einem Laborimplantat verbunden sein. Dieses Laborimplantat besitzt bzgl. der Verbindung und geometrisch in Richtung des Abformpfostens oder Aufbaupfostens gleiche oder ähnliche geometrische Gestalt wie das inserierte Pfostenteil oder Implantat. Nach dem Ausgießen der Abformung mit integriertem Abformpfosten oder Aufbaupfosten und integriertem Laborimplantat erhält man ein Gipsmodell mit eingegossenem Laborimplantat.

Besitzt das verwendete Implantatsystem eine Indizierung, so wurde diese vom Patientenmund auf das Gipsmodell übertragen. Basierend auf diesem Gipsmodell wird die prothetische Versorgung des Implantats oder der Implantate geplant und gefertigt. Hierbei nimmt die rotatorische Position des Aufbauteils auf dem Implantat eine entscheidende Rolle ein. Besitzt das verwendete Implantatsystem eine Indizierung, so sind die Positioniermöglichkeiten des Aufbauteils auf dem Laborimplantat begrenzt. Bei einer Sechskantverbindung sind es sechs Positioniermöglichkeiten. Bei einem Implantatsystem ohne Indizierung können alle Positionen zwischen 0° und 360° verwendet werden. Nach der Fertigung des Zahnersatzes erfolgt meistens eine Anprobe im Patientenmund. Bei dieser Anprobe oder der endgültigen Eingliederung des prothetischen Zahnersatzes muss der Behandler das Aufbauteil und alle weiteren prothetischen Elemente im Patientenmund in der gleichen Position wie auf dem Gipsmodell eingliedern.

Derartigen Systemen ist die korrekte rotatorische Ausrichtung des Zahnersatzes im Patientenmund nach erfolgter Behandlung von besonderer Bedeutung. Andererseits soll aber üblicherweise die eigentliche Behandlung, also die Einbringung des mit dem Zahnersatz versehenen Aufbauteils in den Patientenmund durch Verbindung mit dem eingewachsenen Pfostenteil, möglichst kurz gehalten werden, um den Patienten während der Behandlung nicht zu sehr zu strapazieren. Um beide Bestrebungen möglichst weit gehend erfüllen zu können, kann das Aufbauteil eines derartigen Implantatsystems mehrstückig ausgeführt sein, wobei die das Aufbauteil bildenden Teilstücke grundsätzlich frei zueinander rotierbar ausgebildet sind. In derartigen Systemen kann durch geeignete Abnahme der Mundsituation die korrekte Ausrichtung des Aufbauteils und damit des Zahnersatzes im Labor vorgenommen und auch geeignet vorbereitet werden. Nach erfolgter laborseitiger Fertigstellung des Aufbauteils durch Zusammenfügen der Teilstücke in korrekter Orientierung kann sodann die Einbringung in den Patientenmund auf der Grundlage einer zuvor vorgenommenen Indizierung erfolgen. Dazu ist der Kontaktstift, mit dem das zusammengesetzte Aufbauteil in das Pfostenteil eingebracht wird, üblicherweise geeignet indiziert und in mehrzähliger Symmetrie ausgeführt, so dass bei der Einbringung nur eine vergleichsweise geringe Anzahl möglicher Orientierungen auswählbar und somit die korrekte Einstellung der räumlichen Ausrichtung auf besonders einfache Weise während der Einbringung möglich ist. Derartige Implantatsysteme mit mehrteiliger Ausführung des Aufbauteils sind beispielsweise aus der DE102005008273 oder aus der DE 10 2006 018 726 bekannt.

Wie sich nunmehr aber herausgestellt hat, kann auch bei derartigen Implantatsystemen trotz der vergleichsweise großen Vorteile, die die laborseitige Voreinstellung der Orientierung bietet, aus der mehrteiligen Ausführung des Aufbauteils eine zu große Bauhöhe oder -länge des Aufbauteils resultieren, so dass ein derartiges Implantatsystem möglicherweise aus Platzgründen nicht an allen therapeutisch erforderlichen Stellen geeignet einsetzbar sein könnte.

Als ein weiteres Auslegungsziel für derartige Implantatsysteme ist darüber hinaus in der Regel zu berücksichtigen, dass eine vergleichsweise hohe Dichtigkeit beim mechanischen Kontakt zwischen Aufbauteil und Pfostenteil gewährleistet sein sollte, um ein Eindringen von Keimen oder dergleichen in den inneren Implantatbereich zu vermeiden. Damit soll insbesondere das Risiko von Entzündungen des Gewebes um das Dentalimplantat herum, gerade in den von außen dann nicht mehr ohne weiteres zugänglichen Gewebebereichen, so gering wie möglich gehalten werden.

Der Erfindung liegt daher die Aufgabe zugrunde, ein Dentalimplantat der oben genannten Art bzw. dessen Aufbauteil derart auszugestalten, dass einerseits auf besonders einfache und zuverlässige Weise eine geeignete Indizierung des Implantats ermöglicht ist, wobei andererseits selbst bei gering gehaltener Bauhöhe eine besonders hohe Dichtigkeit zwischen Aufbauteil und Pfostenteil ermöglicht sein soll.

Diese Aufgabe wird erfindungsgemäß gelöst, indem das Aufbauteil gemäß den Merkmalen des Anspruchs 1 oder 2 und/oder das Dentalimplantat gemäß den Merkmalen des Anspruchs 3 ausgeführt sind. Dabei sollen im Verbindungsbereich der Komponenten der Querschnitt des Kontaktstifts und der Querschnitt der diesem zugeordneten Formausnehmung jeweils eine Anzahl von Hauptrichtungen aufweisen, in denen der Halbmesser jeweils einen relativen Maximalwert einnimmt, wobei die Außenkontur des Querschnitts derart gewählt ist, dass sie an jedem Punkt genau eine Tangente aufweist. Weiterhin ist die Außenkontur dabei derart gewählt, dass sie von jeder beliebigen Geraden höchstens in zwei Punkten geschnitten wird, und zwischen jeweils zwei Hauptrichtungen einem Ovalsegment entspricht.

Vorteilhafte Ausgestaltungen der Erfindung sind Gegenstand der Unteransprüche.

Die Erfindung geht von der Überlegung aus, dass gerade im Hinblick auf die vollständige Abdeckung möglicher Einbringungsszenarien die Bauhöhe des Aufbauteils als solches besonders gering gehalten werden sollte, indem das Aufbauteil grundsätzlich einstückig ausgeführt sein sollte. Um dennoch auf einfache Weise eine geeignete Indizierung bereitzustellen, die eine aufwändige Ausrichtung und Justierung des vorbereiteten Implantats im Patientenmund erübrigt, sollte über die Vorgabe eines geeigneten Querschnitts des Kontaktstifts und der diesen zugeordneten Formausnehmung im Pfostenteil eine entsprechende Ausrichtung des Aufbauteils sichergestellt sein. Dazu ist vorgesehen, dass der Halbmesser des Querschnitts des Kontaktstifts und dementsprechend der daran angepassten Formausnehmung im Pfostenteil, also der Radius oder Abstand der Außenkontur der Querschnittsfläche von deren Zentral- oder Mittelpunkt, insbesondere den Schwerpunkt, bezogen auf eine Rotation oder Verschwenkung um diesen, nicht konstant sein sollte, sondern in einer Anzahl von mindestens drei Hauptrichtungen Maximalwerte aufweisen sollte. Beim Einbringen des Kontaktstifts in die Formausnehmung werden diese Hauptrichtungen von Kontaktstift einerseits und Formausnehmung andererseits in Überlappung gebracht, so dass die gewünschte Ausrichtung des am Kontaktstift angebrachten Aufbauteils relativ zum Pfostenteil eintritt.

Der jeweilige Maximalwert des Halbmessers in Abhängigkeit vom Rotationswinkel um den Mittel- oder Schwerpunkt der Querschnittsfläche kann dabei der absolute Maximal- oder Höchstwert des Halbmessers oder auch ein lokaler oder relativer Maximalwert des Halbmessers sein, beim der Halbmesser in der jeweiligen Hauptrichtung einen größeren Wert annimmt als in unmittelbar benachbarten Ausrichtungen.

Um in einem derartigen System, bei dem die Ausrichtung oder Indizierung des Aufbauteils relativ zum Pfostenteil konturbedingt erfolgt, die gewünschte hohe Dichtigkeit im mechanischen Kontaktbereich zwischen Aufbauteil und Pfostenteil, also insbesondere zwischen Kontaktstift und Innenfläche der Formausnehmung, besonders zuverlässig zu gewährleisten, ist vorgesehen, die Außenkontur der Querschnittsfläche des Kontaktstifts und entsprechend der Formausnehmung zwischen den genannten Hauptrichtungen geeignet zu wählen. Dazu ist die Außenkontur im Wesentlichen eckenfrei ausgeführt, so dass im Querschnitt jeder Punkt der Außenkontur genau eine Tangente aufweist.

Zudem ist eine besonders hohe Dichtigkeit erreichbar, indem in den Segmenten zwischen den Hauptrichtungen die Außenkontur bauchig oder nach außen gekrümmt oder gewölbt ausgestaltet ist. Durch diese Ausgestaltung ist bewirkt, dass bei einem Einbringen des Kontaktstifts in die Formausnehmung Formfehler, also beispielsweise produktionsbedingte lokale Konturabweichungen oder dergleichen zwischen den Querschnitten durch Verspannungen und daraus resultierende lokale Verformungen ausgeglichen werden und sich die Querschnitte aneinander angleichen. Die nach außen gekrümmte oder bauchige Ausgestaltung der Kontursegmente resultiert dabei in einer Analogie zu einem Kriterium eines Flächenovals, dass nämlich jede beliebige Gerade die jeweilige Querschnittsfläche in höchstens zwei Punkten schneidet.

Des Weiteren ist die Außenkontur des Querschnitts vorliegend derart gewählt, dass sie in den Bereichen zwischen jeweils zwei Hauptrichtungen einem Ovalsegment entspricht. Mit anderen Wortenerfüllt die Außenkontur in den Segmenten zwischen jeweils zwei Hauptrichtungen zusätzlich auch noch das zweite Kriterium eines Flächenovals, nämlich dass für jeden Punkt des Kontursegments genau eine Tangente existiert. Damit weist die Außenkontur im jeweiligen Segment einen vergleichsweise glatten Verlauf ohne Bildung von Ecken auf.

In besonders vorteilhafter Weiterbildung ist das Dentalimplantat zudem derart ausgestaltet, dass der an das Aufbauteil angeformte Kontaktstift und die diesem zugeordnete Formausnehmung im Pfostenteil jeweils vollständig unter Vermeidung von Ecken in der Querschnittskontur ausgebildet sind. Damit erfüllt der jeweilige Querschnitt vorteilhafterweise auch in den Punkten der Außenkontur in den jeweiligen Hauptrichtungen das zweite Kriterium eines Flächenovals, dass nämlich auch für diese Punkte genau eine Tangente existiert, und bildet somit in seiner Gesamtheit ein Oval. Damit weist die Außenkontur auch in den jeweiligen Hauptrichtungen einen gerundeten Verlauf auf. Gerade durch diesen auch in den Hauptrichtungen gegebenen vergleichsweise runden Verlauf ist gewährleistet, dass beim Einbringen des Kontaktstifts in die Formausnehmung eventuelle geringfügige Fehlausrichtungen in der Orientierung selbsttätig in der Art einer geführten Selbstzentrierung ohne Versperrungen, Klemmungen oder Verhakungen korrigiert werden.

Um zudem eine grundsätzlich besonders gewünschte hohe mechanische Stabilität des montierten Systems gegenüber Verdrehungen auf besonders einfache Weise sicherzustellen, sollte der Querschnitt des Kontaktstifts und entsprechend auch der zugeordneten Formausnehmung in besonders vorteilhafter Weiterbildung in der Art einer mehrzähligen Symmetrie gewählt werden. Eine dreizählige Symmetrie ist dabei erreichbar, indem der Querschnitt in vorteilhafter Ausgestaltung als Trioval ausgeführt ist.

Durch die Querschnittswahl in der genannten Art ist insbesondere erreicht, dass eine im Wesentlichen dreizählige Symmetrie des Querschnitts vorliegt, so dass Fehler bei der Justierung des Implantats während des Einbringens in den Patientenmund nahezu ausgeschlossen sind..

Wie sich überraschenderweise herausgestellt hat, ist durch eine geeignete Wahl der Geometrieparameter in einem derartigen System, insbesondere durch eine geeignete Wahl des Verhältnisses von maximalem Durchmesser zu minimalem Durchmesser, ein besonders günstiges Einbringungsverhalten des Systems erreichbar, bei dem in der Art einer Selbstzentrierung beim Einbringen des Kontaktstifts in die zugeordnete Formausnehmung eine korrekte Ausrichtung des Aufbauteils erfolgt.

In besonders vorteilhafter Weiterbildung ist die Verbindung zwischen dem Pfostenteil und dem Aufbauteil konisch ausgebildet. Dazu sind vorteilhafterweise sowohl der Kontaktstift des Aufbauteils in seiner Längsrichtung als auch der durch die zugeordnete Formausnehmung im Pfostenteil gebildete Aufnahmekanal für den Kontaktstift jeweils konisch ausgeführt.. Dadurch kann der Zahnarzt beim Einbringen das Aufbauteil vergleichsweise grob ausgerichtet einsetzen, da zu Beginn des Eintritts des Kontaktstifts in die Formausnehmung aufgrund der konischen Ausgestaltung beider Teile die Flächendifferenz und das damit bedingte rotatorische Spiel noch vergleichsweise groß sind.

Beim weiteren Einschieben des Kontaktstifts in die Formausnehmung gleichen sich die Querschnittsgrößen hingegen zunehmend an, so dass sich das rotatorische Spiel automatisch in Folge des Einbringens verringert und damit eine zunehmend präzisere Ausrichtung des Aufbauteils in rotatorischer Richtung erfolgt. Bei vollständig eingeschobenem Kontaktstift, also sobald der Kontaktstift mechanischen und formschlüssigen Kontakt mit der Formausnehmung aufweist, ist dabei eine nahezu spielfreie, vollständig richtige Ausrichtung gewährleistet. Die konische Ausgestaltung der genannten Bauteile bewirkt zudem eine zusätzliche Hemmung oder Selbsthemmung der beiden Teile, die insbesondere bei angezogener Verbindungsschraube einen besonders zuverlässigen Form- und Kraftschluss zwischen den Komponenten herstellt und damit eine besonders hohe mechanische Stabilität des Gesamtsystem auch gegenüber Verdrehung bewirkt.

Damit ist zudem auch eine hoch präzise und zuverlässige Übertragung von Kräften und Drehmomenten nahezu frei von rotatorischem Spiel ermöglicht.

Um diesen gewünschten Effekt einer automatischen Selbstausrichtung des Aufbauteils beim Einbringen des Kontaktstifts in die Formausnehmung noch weiter zu begünstigen, ist der Konuswinkel für den Kontaktstift und/oder die Formausnehmung vorteilhafterweise zwischen 1° und 15°, vorzugsweise zwischen 4° und 10°, besonders bevorzugt etwa 6°, gewählt. Gerade durch eine derartige Parameterwahl und in besonderem Maße in Kombination mit den oben genannten Geometrieparametern für den Querschnitt, insbesondere durch die Abrundungen der Ecken im Querschnitt, ist eine besonders einfache und zuverlässige Handhabung des Systems gerade im Hinblick auf eine einfache und zügige Einbringung des Aufbauteils in das Pfostenteil gewährleistet.

In weiterer vorteilhafter Ausgestaltung ist das Aufbauteil über eine Verbindungsschraube an das Pfostenteil montiert.

Die mit der Erfindung erzielten Vorteile bestehen insbesondere darin, dass durch die geeignete Konturierung und Parametrierung des Querschnitts für den Kontaktstift des Aufbauteils und die zugehörige Formausnehmung im Pfostenteil (bzw. entsprechend umgekehrt) auf einfache und mechanisch stabile Weise eine zuverlässige Ausrichtung des geeignet vorbereiteten, ggf. mit Zahnersatz versehenen Aufbauteils bei der Einbringung in das Pfostenteil erreichbar ist. Damit kann die Behandlungsdauer für den Patienten bei der Einbringung des Aufbauteils in den Mundraum besonders kurz gehalten werden, wobei dennoch eine besonders hochwertige Ausrichtung des Zahnersatzes ermöglicht ist. Gerade durch die Kombination einer zum freien Ende hin sich verjüngenden Ausgestaltung des Aufnahmekanals für den Kontaktstift und den Kontaktstift selbst mit dem Querschnitt von Kontaktstift und Aufnahmekanal kann zudem eine zuverlässige und einfach gehaltene Ausrichtung des Aufbauteils durch Einschieben des Kontaktstifts im Aufnahmekanal sichergestellt werden. Dabei ist insbesondere eine besonders hohe Positionsgenauigkeit erreichbar, die durch die aufgrund des Zusammenwirkens der Komponenten auftretende rotatorische Selbstzentrierung beim Einschieben des Kontaktstifts noch weiter begünstigt wird.

Ein Ausführungsbeispiel der Erfindung wird anhand einer Zeichnung näher erläutert. Darin zeigen:

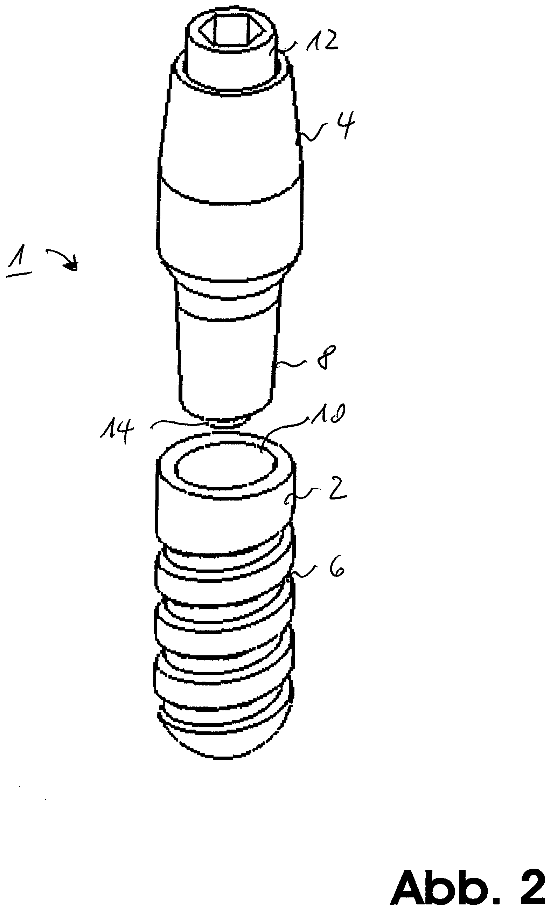

FIG. 1, 2    schematisch ein Dentalimplantat,

FIG. 3    einen an einem Aufbauteil des Dentalimplantats nach FIG. 1 angeformten Kontaktstift im Querschnitt,

FIG. 4    die zur Aufnahme des Kontaktstifts mit elliptischem Querschnitt nach FIG. 3 im Pfostenteil vorgesehene Formausnehmung,

FIG. 5-40    jeweils paarweise eine alternative Querschnittsform für den Kontaktstift des Dentalimplants und die zugehörige Formausnehmung,

FIG. 41 schematisch eine Ellipse,

FIG. 42 einen in eine Formausnehmung eingebrachten Kontaktstift, und

FIG. 43 schematisch eine Ellipse.

Gleiche Teile sind in allen Figuren mit denselben Bezugszeichen versehen.

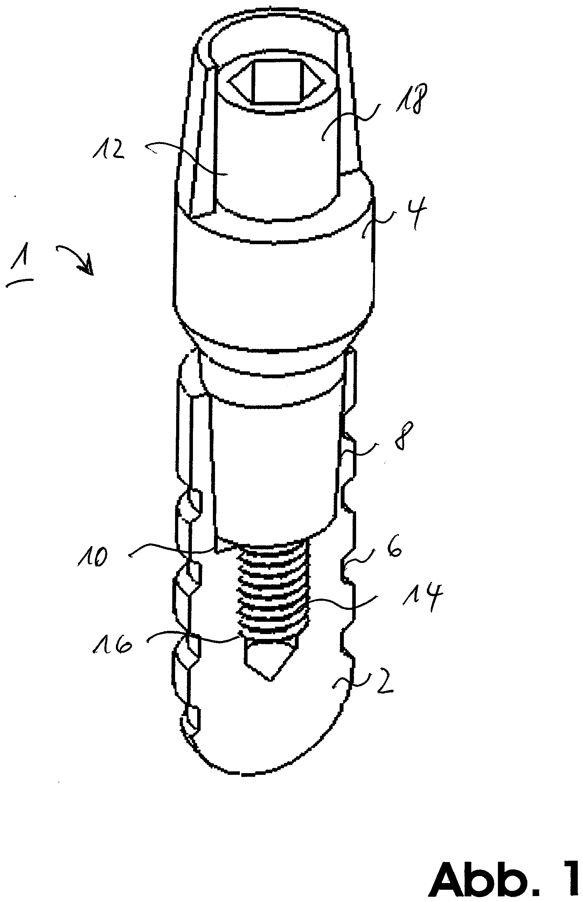

Das in FIG. 1 gezeigte Dentalimplantat 1 umfasst ein zur Einbringung in einen Kieferknochen vorgesehenes Pfostenteil 2 und ein diesem zugeordnetes Aufbauteil 4. Das im Ausführungsbeispiel einstückig ausgeführte Aufbauteil 4 ist zur Bestückung mit einem Zahnersatzstück, einer Krone oder einer Prothese vorgesehen. Zur Einbringung des Dentalimplantats 1 in den Patientenmund ist zunächst in einem ersten Behandlungsschritt vorgesehen, dass das Pfostenteil 2 in den Kieferknochen eingebracht wird. Dazu weist das Pfostenteil 2 außenseitig ein Gewinde 6 auf, so dass die Einbringung in den Kieferknochen durch Einschrauben erfolgen kann. Das Gewinde 6 ist im Ausführungsbeispiel dazu als selbstschneidendes Gewinde ausgeführt. Die Steigung des Gewindes 6 kann dabei gleichmäßig oder auch veränderlich ausgeführt sein, wobei durch geeignete Parameterwahl auch evtl. unterschiedliche biologische Gegebenheiten oder dergleichen sowie unterschiedliches Einwachsverhalten berücksichtigt sein können. Die Konstruktion und Auslegung des Gewindes 6 ist dabei insbesondere im Hinblick auf eine gewünschte hohe Primärstabilität und eine gleichmäßige Weiterleitung der bei Kaubelastung des Dentalimplantats 1 auftretenden Kräfte in den Kieferknochen ausgelegt.

Nach der Einbringung des Pfostenteils 2 in den Kieferknochen ist eine Einheilphase von 4 Wochen bis zu sechs Monaten vorgesehen, in der das Pfostenteil in das Gewebe und den Kieferknochen einwachsen soll. Anschließend kann in einem zweiten Behandlungsschritt das Aufbauteil 4 mit dem angebrachten Zahnersatzstück eingesetzt werden. Bei besonders günstigen Knochenverhältnissen und einer entsprechend hohen Primärstabilität kann die Versorgung mit dem Aufbauteil 4 und den weiteren prothetischen Komponenten auch im direkten Anschluss an die Insertion des Pfostenteils oder Implantats erfolgen.

Um auf einfache Weise eine mechanisch vergleichsweise stabile Verbindung zwischen dem Pfostenteil 2 und dem Aufbauteil 4 herstellen zu können, ist an das Aufbauteil 4 ein Kontaktstift 8 angeformt, der beim Zusammenfügen von Pfostenteil 2 und Aufbauteil 4 in eine einen Aufnahmekanal für den Kontaktstift 8 bildende Formausnehmung 10 im Pfostenteil 2 einbringbar ist. Die mechanische Verbindung von Pfostenteil 2 und Aufbauteil 4 erfolgt über eine zugeordnete Verbindungsschraube 12, deren Außengewinde 14 in ein im Pfostenteil 2 vorgesehenes Innengewinde 16 eingeschraubt wird. Der Schraubenkopf 18 der Verbindungsschraube 12 presst dabei das Aufbauteil 4 auf das Pfostenteil 2.

Das Dentalimplantat 1 ist gezielt dafür ausgelegt, bei geeigneter Vorbereitung des Aufbauteils 4 eine zuverlässige und mechanisch stabile rotatorische Ausrichtung des Aufbauteils 4 selbst beim Auftreten vergleichsweise hoher Kräfte, insbesondere durch die Kaubelastung, zu gewährleisten. Dabei soll insbesondere auch die Einbringung und das Eingliedern des mit dem Zahnersatzstück versehenen Aufbauteils 4 in das in dem Kieferknochen eingewachsene Pfostenteil 2 in verhältnismäßig kurzer Behandlungszeit erfolgen können.

Dazu weisen im Ausführungsbeispiel der formschlüssig in die zugeordnete Formausnehmung 10 im Pfostenteil 2 einbringbare Kontaktstift 8 und auch die Formausnehmung 10 im Pfostenteil 2 jeweils einen geeigneten Querschnitt mit mindestens drei Hauptrichtungen auf, in denen der Halbmesser jeweils einen relativen Maximalwert einnimmt. Zudem sind sowohl der Kontaktstift 8 des Aufbauteils 4 als auch die Formausnehmung 10 im Pfostenteil 2 und der durch diesen gebildeten Aufnahmekanal für den Kontaktstift 8 jeweils konisch ausgeführt. Dabei verjüngt sich der freie Querschnitt sowohl des Kontaktstifts 8 als auch der Formausnehmung 10 in Richtung zum Ende des Pfostenteils 2 hin, so dass der durch die Formausnehmung 10 gebildete Aufnahmekanal im Pfostenteil 2 im Wesentlichen eine Art von trichterförmigem Kanal bildet. Dadurch ist gewährleistet, dass der Querschnitt des Kontaktstifts 8 an dessen Ende eine im Vergleich zur von der Formausnehmung 10 gebildeten Eintrittsöffnung im Pfostenteil 2 vergleichsweise kleine Fläche aufweist, so dass beim Eintritt des Kontaktstifts 8 in die Formausnehmung 10 eine vergleichsweise große Flächendifferenz und somit ein vergleichsweise großes rotatorisches Spiel zwischen den genannten Komponenten besteht.

Dadurch ist beim Einbringen des Kontaktstifts 8 in die Formausnehmung 10 ausreichend, wenn das Aufbauteil 4 lediglich vergleichsweise grob in rotatorischer Richtung ausgerichtet ist. Durch den sich trichterförmig zusammenziehenden konischen Aufnahmekanal mit dem genannten Querschnitt erfolgt beim weiteren Einbringen des Kontaktstifts 8 in die Formausnehmung 10, also während des Einsetzens des Aufbauteils 4 in das Pfostenteil 2, eine zunehmende Angleichung der jeweiligen Querschnittsflächen, so dass der Kontaktstift 8 und damit das Aufbauteil 4 zunehmend durch den sich einstellenden Formschluss mechanisch geführt wird. Wenn schließlich der Kontaktstift 8 voll in die Formausnehmung 10 eingebracht ist und in dieser formschlüssig anliegt, bilden die Flächen einen durchgängigen Formschluss, so dass damit auch die rotatorische Ausrichtung des Aufbauteils 4 eindeutig festgelegt ist. Durch das Einbringen erfolgt somit bereits aufgrund der Formgebung und Konturierung von Kontaktstift 8 und Formausnehmung 10 eine selbsttätige Ausrichtung des Aufbauteils 4, so dass beim Einsetzen des Zahnersatzes keine weiteren Justiereingriffe durch den Zahnarzt notwendig sind.

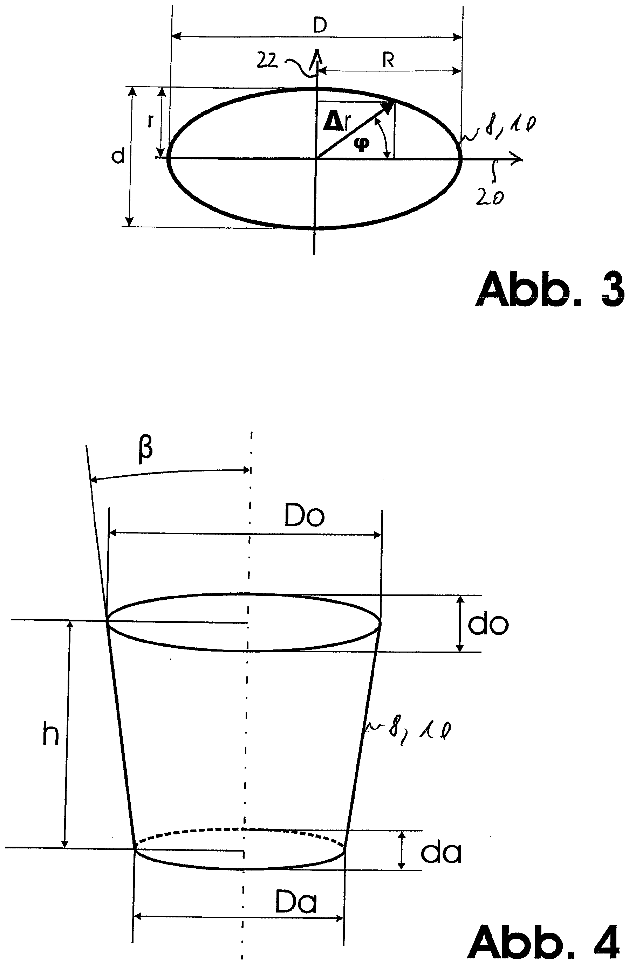

Zur Erläuterung der nachfolgend verwendeten Parameter ist in FIG. 3 eine Ellipse gezeigt, die durch eine erste Hauptachse - in FIG. 3 durch den Pfeil 20 gekennzeichnet - mit maximalem Durchmesser D und eine zweite Hauptachse - in FIG. 3 durch den Pfeil 22 gekennzeichnet - mit minimalem Durchmesser d charakterisiert ist.

Die lineare Exzentrizität e dieser Ellipse wird dabei im Einklang mit der herkömmlichen Definition beschrieben durch die Formel $e = \sqrt{D^2/4 - d^2/4}$ , wohingegen die so genannte numerische Exzentrizität ε der Ellipse gegeben ist durch die Beziehung ε = 2e/D. Die numerische Exzentrizität einer Ellipse kann einen Wert zwischen 0 und 1 annehmen. Ist die Exzentrizität bei 0 hat man einen Kreis.

Um das Eingliedern des Zahnersatzes beim Zusammenfügen des Aufbauteils 4 mit dem Pfostenteil 2 besonders zu erleichtern und dabei die gewünschte konturbedingte Selbstzentrierung beim Einbringen besonders zu begünstigen, sind die geometrischen Parameter von Kontaktstift 8 und Formausnehmung 10 nach folgenden Kriterien gewählt: Je größer die Exzentrizität einer im Querschnitt nicht-runden Verbindung, desto besser die Positionsfindung der Bauteile untereinander. Bezogen auf die mechanischen Eigenschaften und die mechanische Festigkeit ist eine große Exzentrizität jedoch eher ungünstig, insbesondere weil der maximale Implantatdurchmesser des Pfostenteils 2 begrenzt ist. Der Durchmesser eines Pfostenteils 2 beträgt üblicherweise zwischen 2,5 mm und 6 mm. Je größer die Exzentrizität, desto ungleichmäßiger ist die Wanddicke des Pfostenteils 2 und des Aufbauteils 4. Umfangreiche Untersuchungen von Prototypen haben ergeben, dass die numerische Exzentrizität ε nicht kleiner als 0,3 sein sollte und zur besonders günstigen Positionsfindung vorzugsweise nicht kleiner als 0,35 ist. Um im Gegenzug die Festigkeit von Pfostenteil 2, Aufbauteil 4 und falls nötig der Verbindungsschraube nicht zu sehr herabzusetzen, haben Festigkeitsstudien mit Prototypen ergeben, dass die numerische Exzentrizität ε nicht größer als 0,7 sein sollte und möglichst nicht größer als 0,8 ist. Eine ganz besonders bevorzugte Kombination zwischen guter Positionierung und hoher Festigkeit ergab sich bei den numerischen Exzentrizitätswerten ε zwischen 0,4 und 0,5.

Die konische Ausführung von Formausnehmung 10 einerseits und daran angepasst im Kontaktbereich dem Kontaktstift 8 andererseits ist der Darstellung in FIG. 4 entnehmbar. Dieser konische Bereich ist charakterisiert durch die Geometrieparameter Konuswinkel β, wirksame Konuslänge h, maximaler und minimaler Durchmesser am oklusalen Ende der Kontaktstifte 8 $D_o$ bzw. $d_o$ und maximaler und minimaler Durchmesser am apikalen Ende des Kontaktstifts 8 $D_a$ bzw. $d_a$. Diese Geometrieparameter sind bevorzugt nach folgenden Kriterien gewählt: Je mehr Positionierungsmöglichkeiten der Behandler für ein Aufbauteil 4 im Pfostenteil 2 hat, desto schwieriger ist die Positionsfindung. Ein bevorzugtes Optimum aus Sicht der Positionsfindung liegt bei lediglich einer Positionierungsmöglichkeit. Handelt es sich dabei aber um eine konische Indizierung (z. B. ein Halbkreis elliptisch, ein Halbkreis rund) besteht die unvermeidbare Gefahr dass das Aufbauteil 4 falsch eingebracht werden kann. Wird anschließend zur Fixierung die Verbindungsschraube 12 angezogen, könnte entweder das Pfostenteil 2 oder das Aufbauteil 4 beschädigt werden. Um die Gefahr einer derartigen Beschädigung zu vermeiden, sind vorzugsweise mindestens drei Positionierungsmöglichkeiten vorgesehen. Handelt es sich um mindestens drei Positionierungsmöglichkeiten, besteht nämlich zwar auch die Gefahr der Beschädigung der Bauteile, die aber durch gezielte Dimensionierung vermeidbar ist. Die Gefahr besteht immer dann wenn das Bauteil um ca. 360°/(2*Positionierungsmöglichkeiten) rotatorisch versetzt eingebracht wird und anschließend die Verbindungsschraube 12 angezogen wird. Bei einer elliptischen bzw. ovalen Geometrie der Indizierung wäre das 360°/(2*2) = 90°.

Die Vermeidung dieser Gefahr wird in einer besonders bevorzugten Wahl der Geometrieparameter erreicht, indem entweder

1. der Konuswinkel β in Abhängigkeit der Radiusänderung innerhalb der Indizierungsgeometrie und der Konuslänge h des Aufbauteils 4, oder in anderer Reihenfolge der Abhängigkeiten, so gewählt wird, dass bei einem Versatz um ca. 360°/2*Positionierungsmöglichkeiten das Aufbauteil 4 nicht in das Pfostenteil 2 einbringbar ist und das Gewinde 14 der Verbindungsschraube 12 nicht im Gewinde 16 des Pfostenteils 2 greift. Das Gewinde 14 der Verbindungsschraube 12 sollte somit erst dann im Gewinde 16 des Pfostenteils 2 greifen, wenn das Aufbauteil 4 in das Pfostenteil 2 eingebracht werden kann und wenn der rotatorische Versatz gegenüber der Endposition so klein ist, dass allein durch die Kraft, die durch die Verbindungsschraube 12 aufgebracht wird, die Selbstzentrierung des Aufbauteils 4 im Pfostenteil 2 beginnt, ohne dass die Haftreibung zwischen den Kontaktflächen von Aufbauteil 4 und Pfostenteil 2 die Selbstzentrierung verhindern kann,

oder

2. der Konuswinkel β in Abhängigkeit der Radiusänderung innerhalb der Indizierungsgeometrie, der Konuslänge h des Aufbauteils 4 oder in anderer Reihenfolge der Abhängigkeiten so gewählt wird, dass bei einem Versatz um ca. 360°/(2*Positionierungsmöglichkeiten) das Gewinde 14 der Verbindungsschraube 12 nicht im Gewinde 16 des Pfostenteils 2 greift.

Das Gewinde 14 der Verbindungsschraube 12 sollte erst dann im Gewinde 16 des Pfostenteils 2 greifen, wenn der rotatorische Versatz gegenüber der Endposition so klein ist, dass allein durch die Kraft, die durch die Verbindungsschraube 12 aufgebracht wird, die Selbstzentrierung des Aufbauteils 4 im Pfostenteil 2 beginnt, ohne dass die Haftreibung zwischen den Kontaktflächen von Aufbauteil 4 und Pfostenteil 2 die Selbstzentrierung verhindern.

Die Variante 1 ist für die Montagefreundlichkeit vergleichsweise ungünstig. Je größer die Exzentrizität des Querschnitts, je kleiner der Konuswinkel $\beta$ und je kürzer die gemeinsam konische Kontaktfläche zwischen dem Aufbauteil 4 und dem Pfostenteil 2, desto größer die Gefahr, dass das Aufbauteil 4 nicht bei jeder rotatorischen Position in das Pfostenteil 2 einführbar ist. Das bedeutet, dass der breitere, apikale Querschnittsbereich des Aufbauteils 4 größer ist als der enge Eingangsbereich des Pfostenteils 2.

Die folgende Formel beschreibt $D_a$ in Abhängigkeit vom Konuswinkel $\beta$, $D_o$ und der wirksamen Konuslänge h zwischen dem Aufbauteil 4 und dem Pfostenteil 2:

$$D_a = D_o - 2h*\tan(\beta)$$

Für eine sehr gute Montagefreundlichkeit ist bevorzugt Da < $d_o$ gewählt. Ist Da $\geq$ $d_o$, ist eine gute Montagefreundlichkeit nicht gegeben, da das Aufbauteil 4 nicht in jeder rotatorischen Position um die Achse des eigenen Kontaktstifts in das Pfostenteil 2 einführbar ist.

Bei der Variante 2 ist die Montagefreundlichkeit besonders günstig. Die Dimensionierung der numerischen Exzentrizität $\varepsilon$, des Konuswinkels $\beta$ und der wirksamen Konuslänge h sollte derart erfolgen, dass der selbstzentrierende Effekt der konischen Verbindung voll gewährleistet ist, sobald die Verbindungsschraube 12 im Gewinde 16 des Pfostenteils 2 greift. Das bedeutet, dass die Hubhöhe des Aufbauteils 4 mit ausgeformten Kontaktstift beim rotatorischen Verdrehen um die Achse des eigenen bei triovalen Verbindungen oder diesen ähnlichen Ausführungen um ca. 360°/(2*Positionierungsmöglichkeiten) größer sein sollte als die wirksame, gemeinsame Gewindelänge von Verbindungsschraube 12 und Pfostenteil 2.

Unter der Hubhöhe $\Delta$H ist dabei der Versatz oder die Verschiebung des Aufbauteils 4 in seiner Längsrichtung zu verstehen, die sich ergibt, wenn das Aufbauteil 4 relativ zum Pfostenteil aus einer Position korrekter Ausrichtung, bei der die Querschnitte von Kontaktstift 8 einerseits und Formausnehmung 10 andererseits überlappen, heraus in eine Position "maximaler Verdrehung", bei der die Hauptrichtungen des Kontaktstifts 8 in die Zwischenpositionen der Formausnehmung 10 zwischen deren Hauptrichtungen weist, verdreht wird. Der daraus resultierende Versatz der Querschnittsflächen zueinander resultiert aufgrund der konischen Ausgestaltung des Aufnahmekanals in einer Anhebung des Aufbauteils 4 in seiner Längsrichtung, eben den so genannten Hub.

Bei besonders günstiger Dimensionierung greift die Verbindungsschraube 12 erst, wenn die Steigung der Hubhöhe $\Delta$H in Abhängigkeit vom Kontaktwinkels $\omega$ mindestens 5 $\mu$m/° beträgt. Besonders günstig erwies sich eine Steigung größer als 10 $\mu$m/° und insbesondere größer als 15 $\mu$m/°.

Die Hubhöhe des Aufbauteils im Pfostenteil in Abhängigkeit der numerischen Exzentrizität $\varepsilon$, des Konuswinkels

$$\Delta H = \frac{Do - \dfrac{d}{\sqrt{1 - \varepsilon^2 \cdot \cos^2(\omega)}}}{\tan(\beta)}$$

$\beta$, des minimalen Duchmessers d der zweiten Hauptaches und des Kontaktwinkels $\omega$ wird durch die folgende Formel beschrieben.

Verbindungsschrauben 12 die bei den Verbindungen zwischen Aufbauteil 4 und Pfostenteil üblicherweise verwendet werden, haben üblicherweise eine Gewindesteigung zwischen 0,2 mm und 0,5 mm pro Umdrehung. Geht man davon aus, dass mindestens zwei Gewindegänge, vorzugsweise mindestens drei Gewindegänge und bevorzugt mindestens vier Gewindegänge zwischen der Verbindungsschraube 12 und dem Pfostenteil 6 tragen sollen, sollte die Hubhöhe des Aufbauteils 4 im Pfostenteil 2 bei 90° mindestens 0,4 mm betragen. Günstiger ist es allerdings, wenn die Hubhöhe größer als 0,6 mm und insbesondere mindestens 1 mm beträgt. Das bedeutet dass es möglich wird genügend tragende Gewindegänge zu gewährleisten, wobei das Gewinde erst bei einer günstigen Verdrehung (< 90°) greift, nämlich bei einer Verdrehung, bei welcher die Selbstzentrierung mittels der Spannkraft funktioniert, die durch die Verbindungsschraube 12 beim Anziehen dieser zwischen Aufbauteil 4 und Pfostenteil 2 aufgebracht wird.

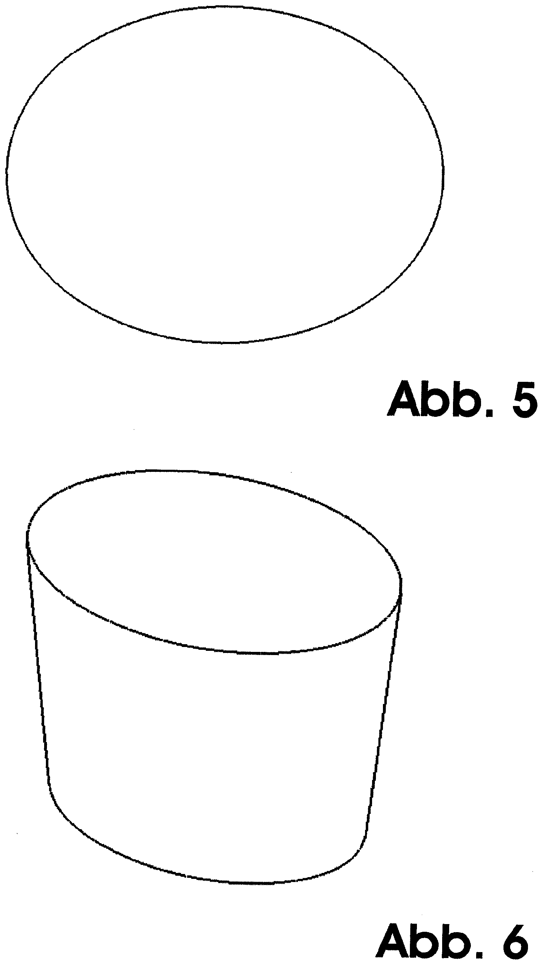

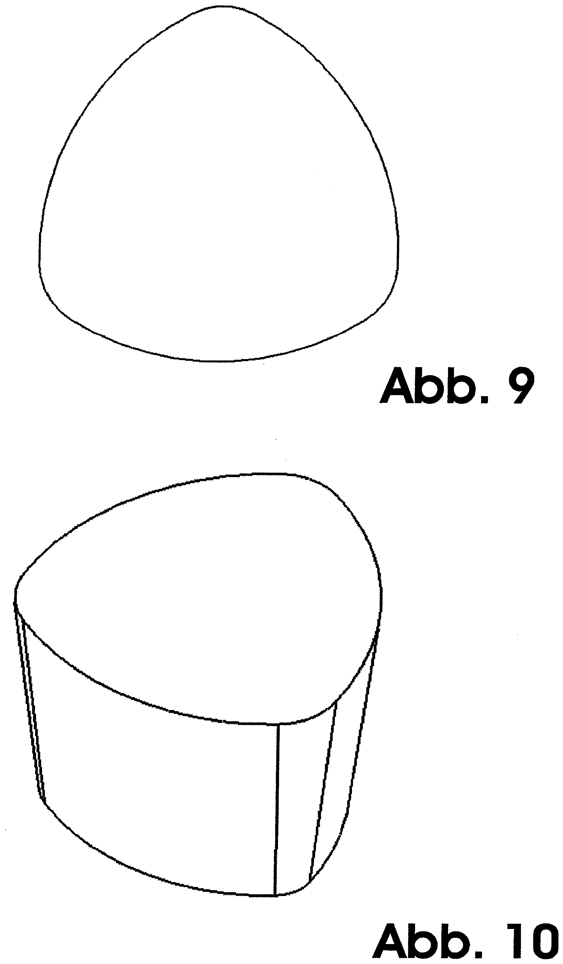

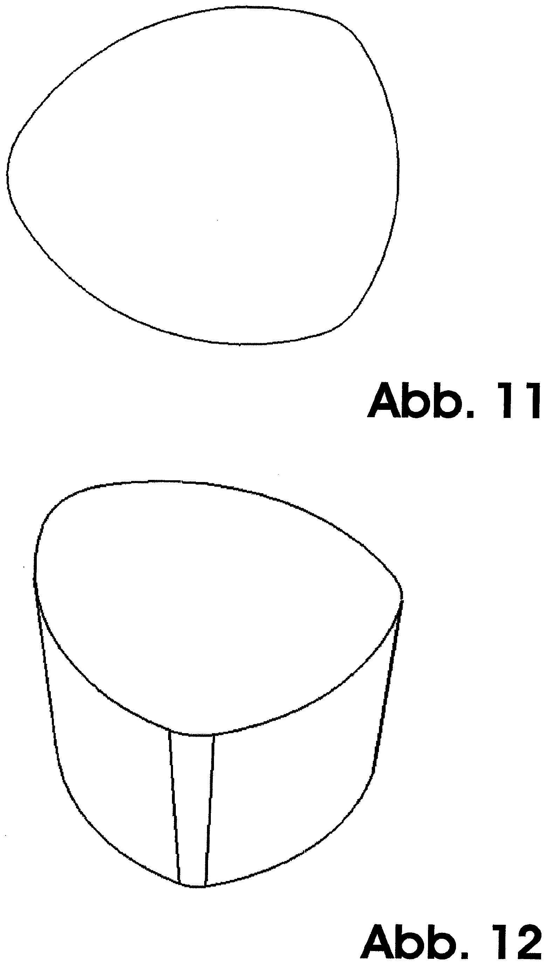

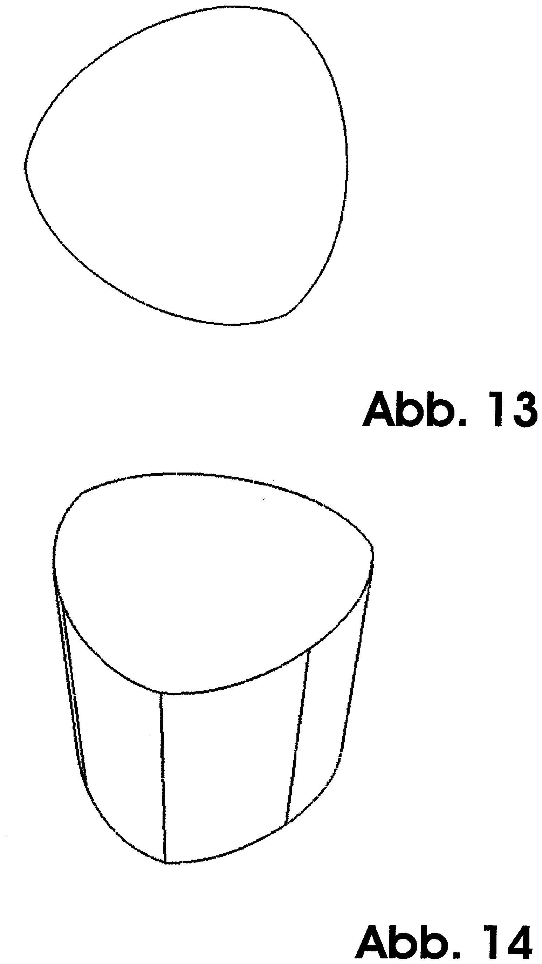

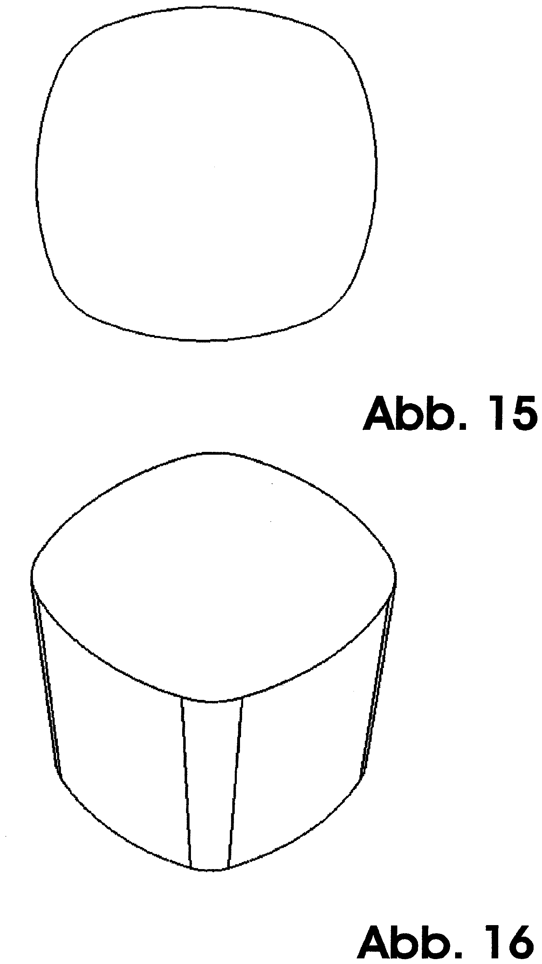

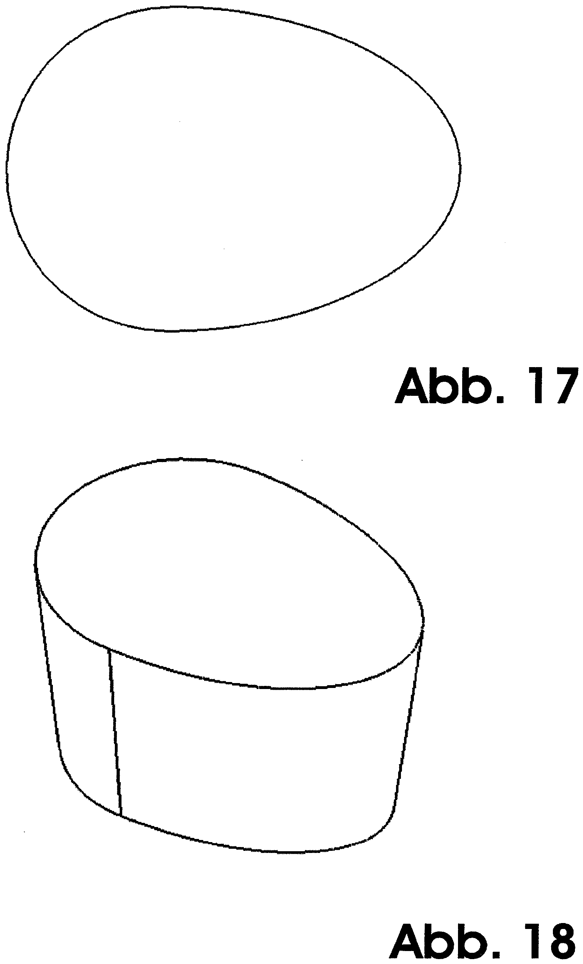

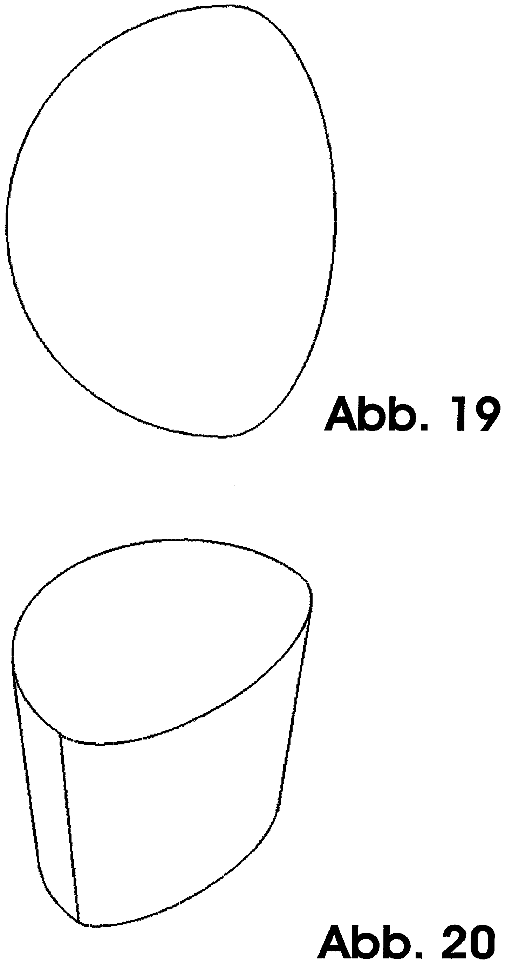

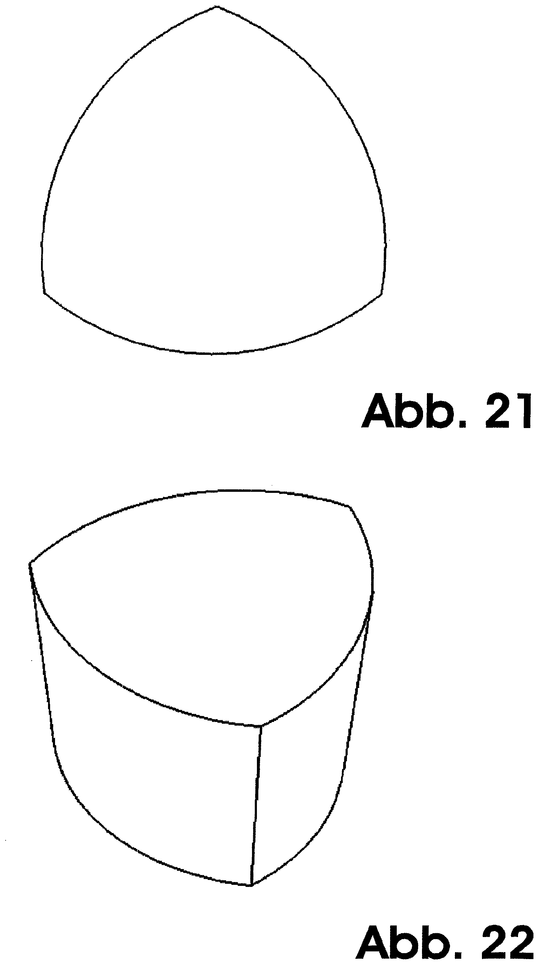

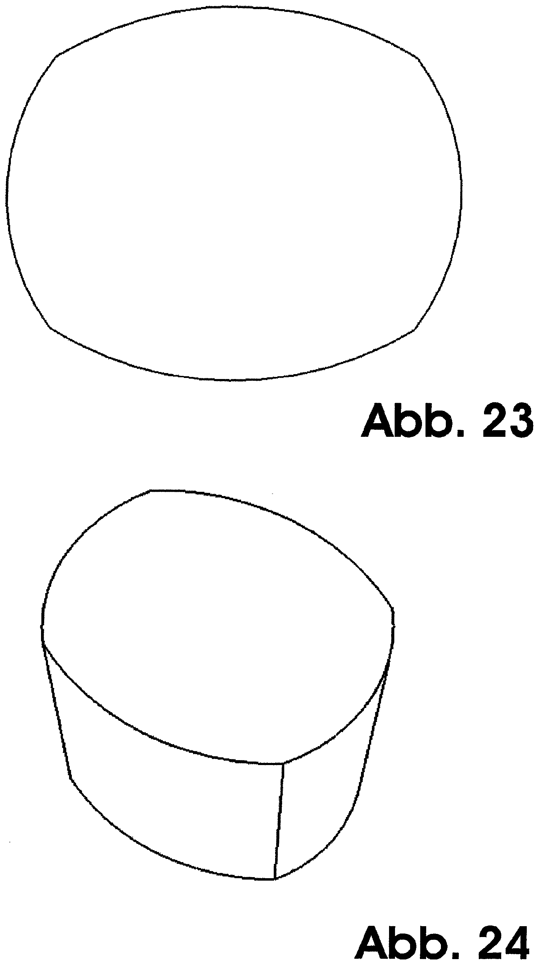

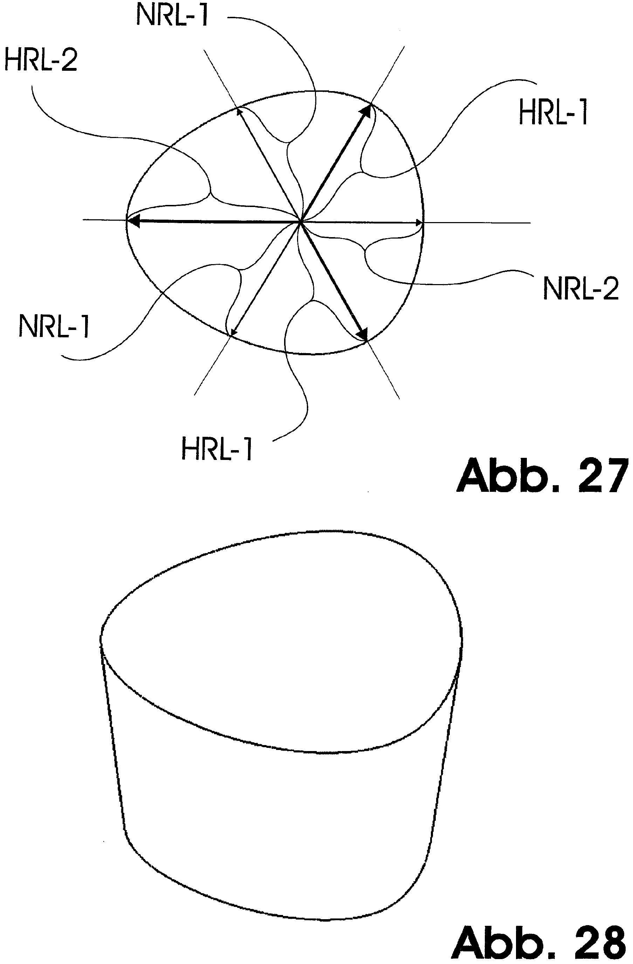

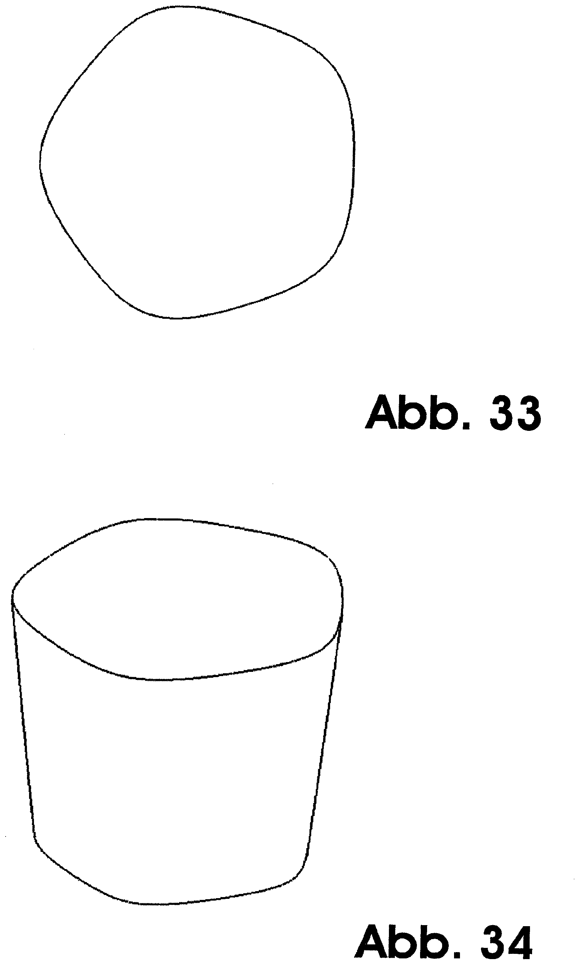

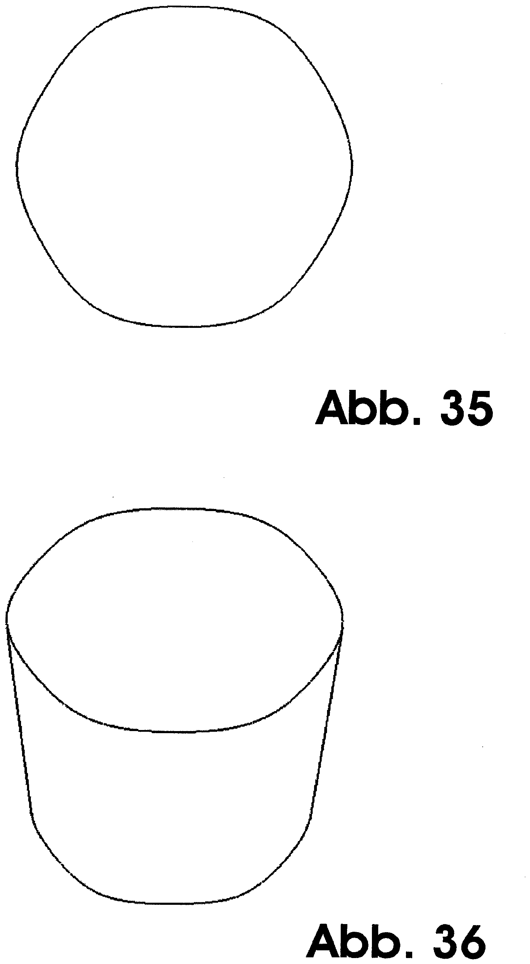

In den weiteren FIG. 5 bis 40 sind Querschnitte des Kontaktstiftes bzw. die zugehörigen Formausnehmungen dargestellt.

Die Vorteile von konischen Verbindungen zwischen Aufbauteil und Pfostenteil sind grundsätzlich bereits bekannt. Es kommt bei konischen Verbindungen insbesondere bei zur Pfostenteilachse exzentrischen Belastungen, zur flächigen Kraftübertragung vom Aufbauteil zum Pfostenteil. Weiterhin kann sich das Pfostenteil einen großen Teil der auf das Pfostenteil zu übertragenden Kraft direkt übertragen, indem sich das Aufbauteil direkt im Pfostenteil abstützt. Dies führt zur Entlastung der Verbindungsschraube die das Aufbauteil und das Pfostenteil fixieren soll. Bei Konuswinkeln β, die kleiner als 45° sind, kann dieser Effekt beobachtet werden. Vorzugsweise ist der Konuswinkel kleiner als 15°. Auf diesem Wege wird einer frühzeitigen Lockerung der Verbindung vorgebeugt. Diese mechanische Stabilisierung wirkt als nahezu spielfreies Gesperre gegenüber zum Pfostenteil extraaxial wirkenden Kräften und/oder Biegemomente.

Ein weiterer Vorteil von konischen Verbindungen ist die Dichtigkeit zwischen dem Aufbauteil und dem Pfostenteil. Hier ist es besonders wichtig, dass die Geometrie des an das Pfostenteil angeformten Kontaktstiftes und die in das Pfostenteil eingebrachte Formausnehmung rund und aufeinander abgestimmt sind. Es besteht lediglich der Nachteil, dass der Rotationsschutz zwischen dem Aufbauteil und dem Pfostenteil nur auf der Haftreibung zwischen beiden Bauteilen besteht und keine Indizierung zur Positionsfindung vorhanden ist. Üblicherweise wird dies durch zusätzliche, an das Aufbauteil angeformte Kontaktstifte erreicht. Es sind auch Aufbauteile bekannt, die von okklusal kommend erst einen konischen Kontaktstift besitzen, an den in Richtung apikal ein erster mit einem Gesperre versehener Kontaktstift angebracht ist und in wenigen Fällen apikal von dem zweiten Kontaktstift ein dritter konischer Kontaktstift angebracht ist. In dem entsprechenden Pfostenteil sind diese Geometrien dann als negativ dazu ausgeführte Formaufnehmungen eingearbeitet, so dass eine Kombination aus extraaxialem und rotatorischen Gesperre erreicht werden kann, welches auch als Indizierung genutzt wird.

Ziel ist die Verschmelzung eines an das Aufbauteil angeformten Kontaktstifts, welcher ein extraaxiales Gesperre beinhaltet, mit einem rotatorischen Gesperre, welches als sehr präzise Indizierung genutzt werden kann, in einer einzigen Geometrie. Die würde auch die Bauhöhe des Kontaktstifts verringern ohne die mechanschen Eigenschaften zu verschlechtern. Dies wird erfindungsgemäß gelöst indem die Geometrie des an das Aufbauteil angeformten Kontaktstifts einem Oval entspricht und dessen geometrischen Gesetzen genügt. Die Geometrie der in das Pfostenteil eingebrachten Formausnehmung ist dabei natürlich an die Geometrie des an das Aufbauteil angebrachten Kontaktstifts angepasst, und beide sind aufeinander abgestimmt. Dies hätte auch zur Folge, dass die Vorteile einer runden konischen Verbindung hinsichtlich der Dichtigkeit bestehen bleiben.

Untersuchungen haben gezeigt dass es bei Undichtigkeiten zwischen dem Aufbauteil und dem Pfostenteil zum Eindringen von Flüssigkeiten und Bakterien kommen kann. Dies wiederum kann eine Ursache für den Knochenabbau am Pfostenteil sein. Weitere Folgen können Mundgeruch und der Rückgang des Weichgewebes sein, was mit einer schlechten Ästhetik verbunden sein kann. Diese Problematik ergibt sich vor allem, wenn es zu Relativbewegungen zwischen dem Aufbauteil und dem Pfostenteil kommt, da sie hierbei als Pumpe wirkt. Folglich ist die relativbewegungsfreie und formschlüssige Kraftübertragung in Kombination mit einer Dichtigkeit zwischen dem Aufbauteil und dem Pfostenteil von sehr großer Bedeutung.

Bei runden konischen Verbindungen kommt es in der mesio-distalen und vetibulär-oralen Richtung zu einer Selbstzentrierung. Durch die Veränderung der runden konischen Geometrie in eine ovale kann darüber hinaus bei geeigneter Geometrie auch eine rotatorische Selbstzentrierung erreicht werden. Durch die Veränderung der runden konischen Geometrie in eine ovale werden folglich nur Vorteile erreicht die zur Perfektion der Verbindung zwischen dem Aufbauteil und dem Pfostenteil führen und somit dem Behandler, dem Zahnarzt und dem Patienten zu gute kommen.

Eine Ellipse lässt sich beschreiben als eine zyklische Funktion $\Delta r_{(\varphi)}$ um ein Zentrum, die sich wie folgt definieren lässt:

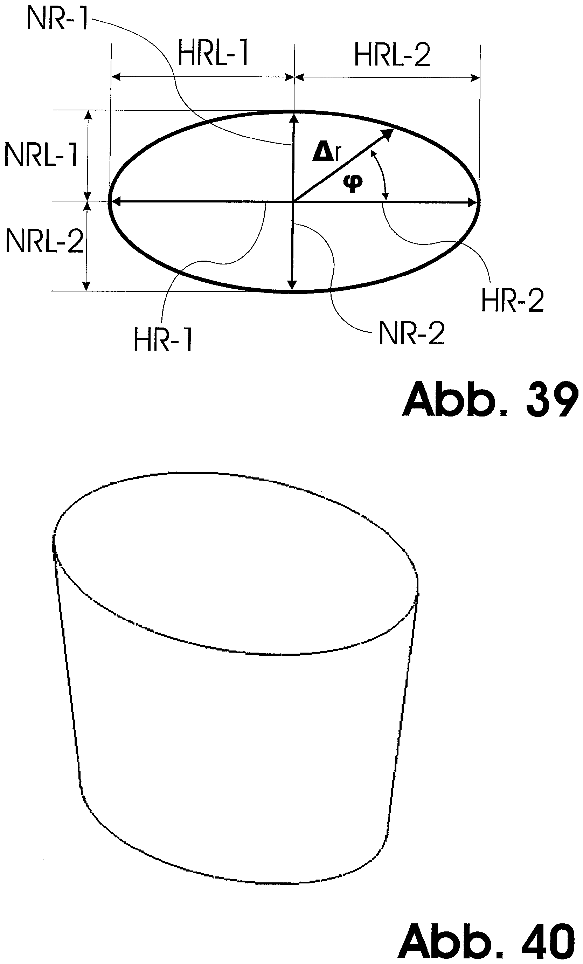

Zur Verdeutlichung ist in Abb. 39 eine Ellipse dargestellt.

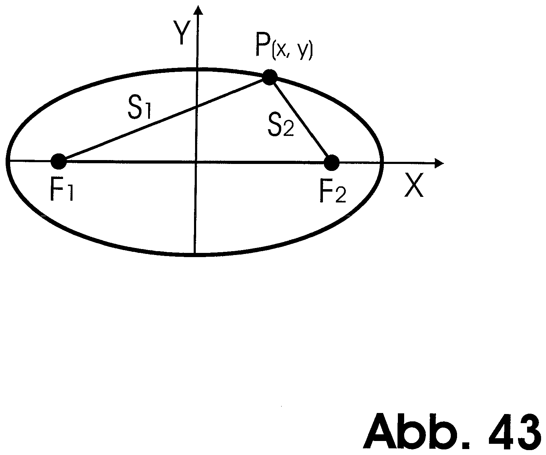

Es gibt zwei Hauptrichtungen, die gebildet werden durch zwei lokale Maxima in $\Delta r_{(\varphi)}$, beide Maxima haben die gleiche Länge und sind parallel. Weiterhin existieren zwei Nebenrichtungen, die gebildet werden durch zwei lokale Minima in $\Delta r_{(\varphi)}$, beide Minima haben den gleichen Wert für $\Delta r_{(\varphi)}$, beide Minima haben die gleiche Länge und sind parallel. Der Winkel zwischen den Hauptrichtungen und den Nebenrichtungen beträgt 90°, zwischen den Hauptrichtungen 180° und zwischen den Nebenrichtungen 180°. Alle Haupt- und Nebenrichtungen haben den gleichen Ursprung. Die Ellipse zeichnet sich dadurch aus, dass sie den Gesetzen eines Ovals entspricht (d. h. eine Gerade schneidet die Kurve maximal zwei Mal und jeder Punkt auf der Kurve besitzt nur eine Tangente) und zusätzlich zwischen den Haupt- und Nebenrichtungen die Krümmung der Kurve in jedem Punkt unterschiedlich ist. Eine Ellipse besteht aus allen Punkten, deren Summe der Entfernung von zwei festen Punkten $F_1$ und $F_2$ gleich ist (Abb. 43). Die Summe ist in Abb. 43 $S_1 + S_2$. Verwendet man eine solche Geometrie für den an das Aufbauteil angeformten Kontaktstift und für die Formausnehmung im Pfostenteil und sind diese von den Maßen auf einander abgestimmt, würden sich zwei Positioniermöglichkeiten ergeben. In einer besonders günstigen Ausführung sind der Kontaktstift am Aufbauteil und die Formausnehmung im Pfostenteil konisch ausgeführt.

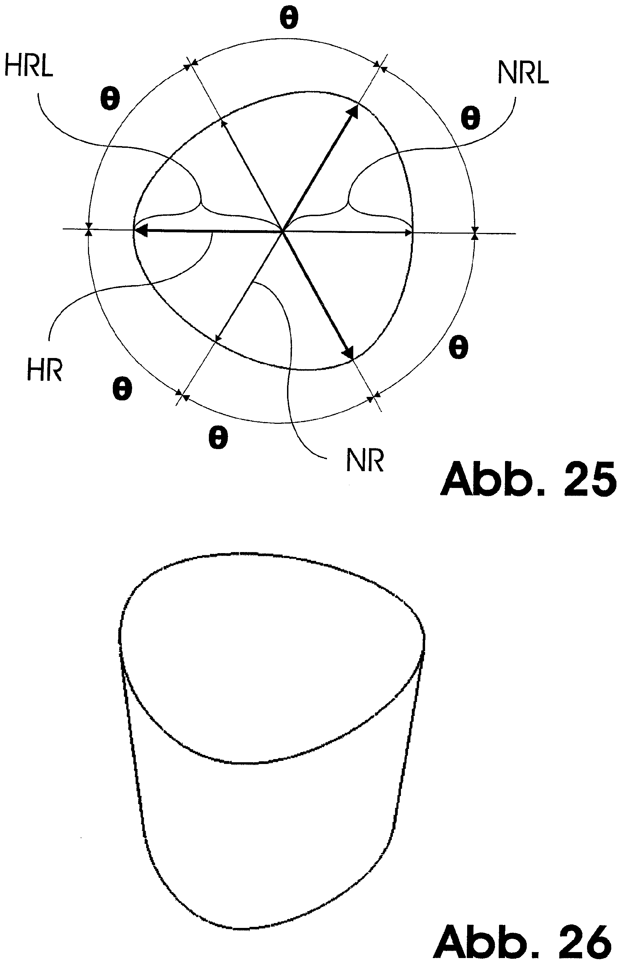

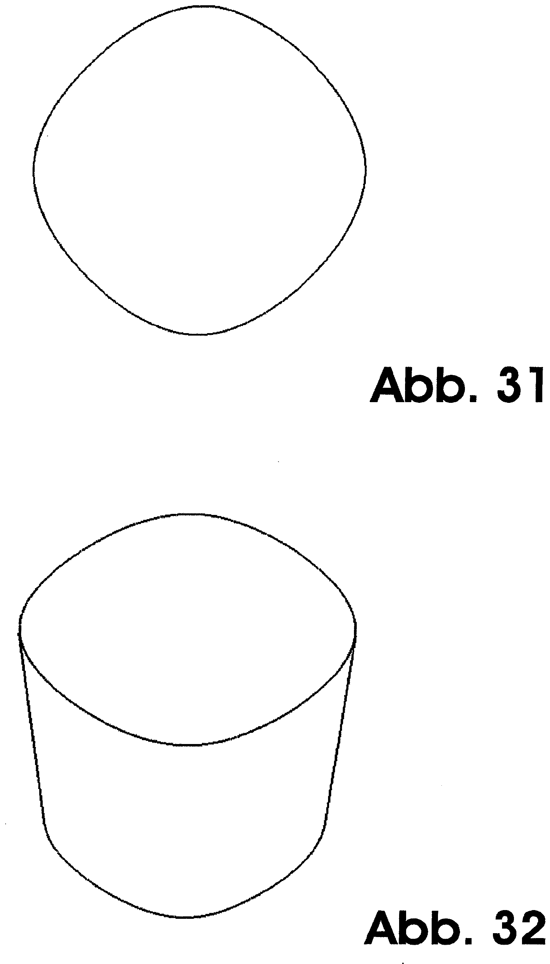

Möchte man nun die Anzahl der Positioniermöglichkeiten vergrößern, aber nicht auf die außergewöhnlich guten Eigenschaften der Ellipsengeometrie verzichten, ist es möglich dies zu erreichen, indem man die Anzahl der Haupt- und Nebenrichtungen erhöht. Z. B. auf 3 (Abb. 25), 4, 5, 6, 7, 8, 9, oder mehr. Wichtig hierbei ist es, dass alle Haupt- und Nebernrichtungen den gleichen Ursprung haben, die Länge aller Hauptrichtungen gleich ist, die Länge aller Nebenrichtungen gleich ist, die Winkel zwischen den benachbarten Hauptrichtungen gleich sind, die Winkel zwischen den benachbarten Nebenrichtungen gleich sind, in einer besonders günstigen Ausführung die Winkel zwischen den benachbarten Hauptrichtungen und den Nebenrichtungen halb so groß sind wie die Winkel zwischen den benachbarten Hauptrichtungen und die Winkel zwischen den benachbarten Nebenrichtungen, die Anzahl von Haupt- und Nebenrichtungen gleich ist, der Verlauf zwischen den Hauptrichtungen und Nebenrichtungen den Gesetzen eines Ovals genügt und zusätzlich zwischen den Haupt- und Nebenrichtungen die Krümmung der Kurve in jedem Punkt unterschiedlich ist. Dadurch ergibt sich, dass die Anzahl der Hauptrichtungen bzw. der Nebenrichtungen die Anzahl der Positionierungsmöglichkeiten ergibt, bei denen ein Form- und Kraftschluss vorliegt. Vorzugsweise hat eine geeignete Geometrie maximal vier Haupt- und vier Nebenrichtungen (Abb. 31 und Abb. 32), insbesondere drei Haupt- und drei Nebenrichtungen (Abb. 25 und Abb. 26).. Werden vier, fünf oder sechs Haupt und Nebenrichtungen verwendet ergeben sich Geometrien wie sie auf den Abbildungen Abb. 31 bis Abb. 36 dargestellt sind, die ebenfalls eine günstige Ausführung sind.

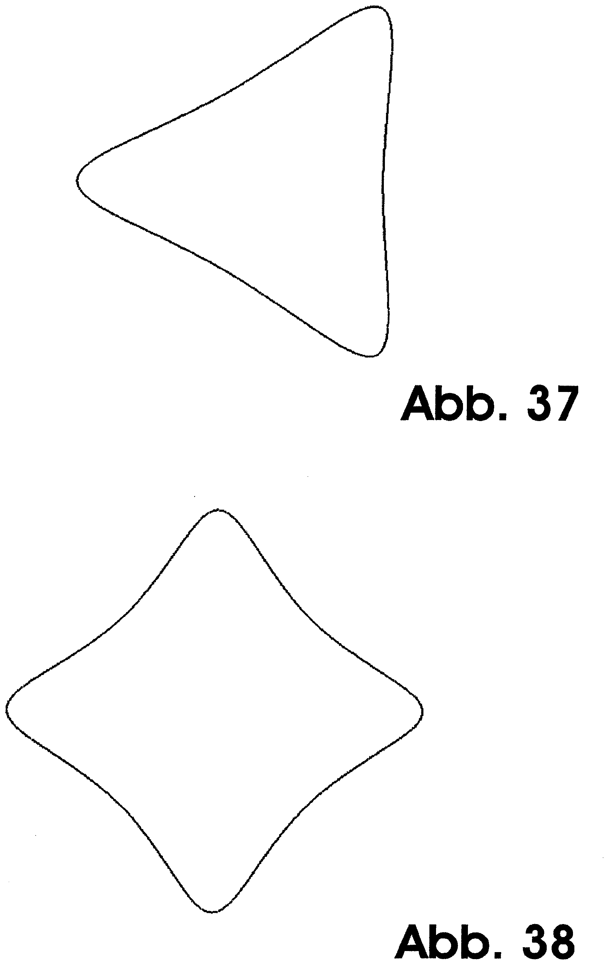

Bedingt durch die Längendifferenz zwischen Haupt- und Nebenrichtungen ergibt sich eine Exzentrizität. Wird die Nebenrichtung im Verhältnis zur Hauptrichtung zu klein wechselt die Krümmung von konvex in konkav und die Bedingungen des Ovals sind nicht mehr gegeben (z. B. Abb. 37 und Abb. 38). Bedingt durch Fertigungstoleranzen ist die Gefahr der Undichtigkeit der Verbindung groß. Auch wird der Anpressdruck zwischen Aufbauteil und Pfostenteil ungleichmäßig, was der Beweglichkeit zwischen Aufbauteil und Pfostenteil entgegenkommt. Darüber hinaus wird die Differenz zwischen der Hauptrichtungslänge und der Nebenrichtungslänge größer, was einen negativen Einfluss auf die Festigkeit der Verbindung und die einzelnen Bauteile hat. Umfangreiche Untersuchungen haben ergeben, dass die Nebenrichtungen bevorzugt folgende prozentuale Längenbereiche der Hauptrichtungen haben sollten.

| Anzahl der Haupt- und Nebenrichtungen | Mindestlänge der Nebenrichtung in % der Hauptrichtungslänge | Maximallänge der Nebenrichtung in % der Hauptrichtungslänge |
| --- | --- | --- |
| 3 | 70% | 95 % |
| 4 | 80% | 97 % |
| 5 | 90% | 98 % |
| 6 | 95% | 99 % |
| 7 | 96% | 99 % |
| 8 | 97 % | 99 % |
| 9 | 98% | 99 % |

Beim Einführen eines an ein Aufbauteil angeformten ovalen und konisch ausgeführten Kontaktstiftes in die entsprechende Formausnehmung eines Pfostenteils ergibt sich bei rotatorisch nicht exakt ausgerichteter Position des Aufbauteils zum Postenteil vor der formschlüssigen Positionierung der Bauteile gegeneinander ein Kontakt zueinander. Dieser Kontakt ist nicht flächig sondern linienförmig oder punktuell. Bei einer rotatorischen Positionierung in Grad zueinander nach der Formel 360°/(2 × Anzahl der Positionierungsmöglichkeiten) kann es bei einer rein axialen Einschubrichtung des Aufbauteils in das Pfostenteil zum verklemmen der Bauteile kommen. Ab einem rotatorischen Depositionierung in Grad kleiner oder größer und ungleich einem vielfachen nach der Formel 360°/(2 × Anzahl der Positionierungsmöglichkeiten) kommt des bei einer axialen Einschubrichtung und axialen Einschubkraft bei nahezu freier rotatorischer Beweglichkeit des Aufbauteils (d. h. rotatorische Beeinflussung der Aufbauteilposition fast ausschließlich durch das Postenteil) zu einer rotatorischen Selbstausrichtung des am Aufbauteils angeformten ovalen und konisch ausgeführten Kontaktstifts in der entsprechenden Formausnehmung im Pfostenteil. Diese rotatorische Selbstausrichtung kann auch mit dem Begriff rotatorische Selbstzentrierung beschrieben werden.

Bei besonders günstiger Ausführung eines der beschriebenen Sonderfälle eines Ovals mit gleicher oder größerer Anzahl der Positionierungsmöglichkeiten, Nebenrichtungen und Hauptrichtungen greift die Verbindungsschraube, die das Aufbauteil mit dem Pfostenteil fixiert, erst wenn die rotatorische Selbstzentrierung rein durch die von der Verbindungsschraube erzeugten Kräfte und/oder Momente erfolgen kann. Das bedeutet, dass bevor die rotatorische Selbstzentrierung rein durch die von der Verbindungsschraube erzeugten Kräfte und oder Momente möglich wird, das Gewinde der Verbindungsschraube noch nicht das im Pfostenteil befindliche Gewinde erreicht hat. Folglich ist die Hubhöhe des Aufbauteils im Pfostenteil bei einem rotatorischen Winkelversatz zwischen diesen größer als die nutzbare und gemeinsame Gewindelänge zwischen der Verbindungsschraube und dem Pfostenteil. Wäre dies nicht derart ausgeführt, sondern würde die Verbindungsschraube im Pfostenteil greifen bevor die rotatorische Selbstzentrierung durch die Kräfte und Momente der Verbindungsschraube erfolgen kann, könnte die zu einer bleibenden Beschädigung des im Kieferknochen des Patienten eingeheilten Pfostenteils führen. Die folge wäre die Explantation des Pfostenteils aus dem Kiefer des Patienten. Die Gefahr besteht immer dann wenn das Bauteil um ca. 360°/(2*Positionierungsmöglichkeiten) rotatorisch versetzt eingebracht wird und anschließend die Verbindungsschraube angezogen wird. Bei einer Geometrie mit drei Haupt-, drei Nebenrichtungen und drei Positionierungsmöglichkeiten wäre das 360°/(2*3) = 60°. Bei allen beschriebenen Geometrien ist es vorteilhaft wenn die Verbindungsschraube nicht im Gewinde des Pfostenteils greift bevor nicht die durch die Verbindungsschraube hervorgerufenen Kräfte und oder Momente für die rotatorische Selbstzentrierung des Aufbauteils im Pfostenteil genügen. Weiterhin ist es vorteilhaft wenn die Geometrien des am Aufbauteil angeformten Kontaktstifts und der im Pfostenteil dafür vorgesehene Formausnehmung, die Exzentrizitäten, die konische Kontaktstiftlänge und der Konuswinkel so dimensioniert sind, dass der Kontaktstift bei jeder Verdrehung um seine eigene Achse zumindest ein kleines Stück, vorteilhafterweise mindestens um 0,1 mm und insbesondere um mindestens 0,5 mm in die dafür vorgesehene Formausnehmung des Pfostenteils eindringen kann. Dies erleichtert die Positionierung des Aufbauteils im Postenteil erheblich.

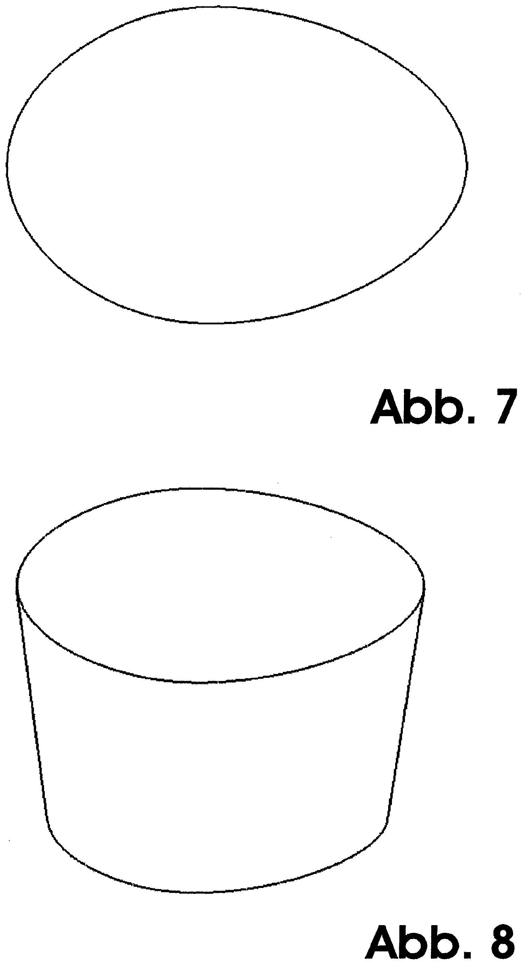

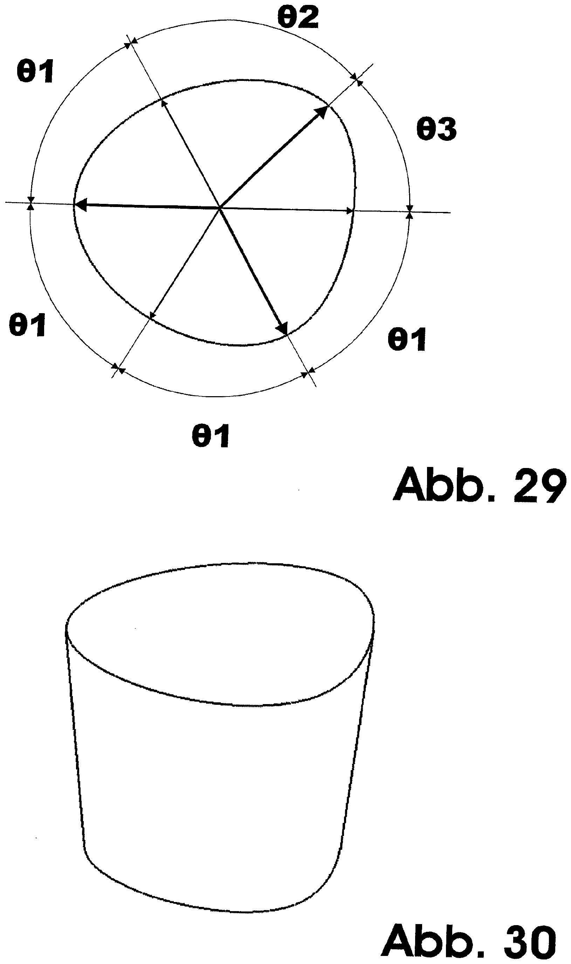

Möchte man basierend auf einem Oval (z. B. drei Haupt- und Nebenrichtungen), welches die gleiche Anzahl von Haupt- und Nebenrichtungen hat, bei denen ein Form- und Kraftschluss erreicht werden kann die Anzahl der Positionierungsmöglichkeiten reduzieren, bei denen sich ein Form- und ein Kraftschluss ergibt, kann dies erreicht werden indem der Ursprung von mindestens einer Haupt- oder Nebenrichtung verändert wird, die Länge der Haupt- und oder Nebenrichtungen bei mindestens einer Haupt- oder Nebenrichtung vergrößert oder verkleinert wird (Abb. 7, Abb. 8 und Abb. 27 und Abb. 28) oder der Winkel von mindestens einer Haupt- oder Nebenrichtung zu den beiden benachbarten Haupt- oder Nebentrichtungen verändert wird (Abb. 29 und Abb. 30). Eine unterschiedliche Anzahl von Haupt- und Nebenrichtungen mit in sich mindestens einer unterschiedlichen Länge hätte den gleichen Effekt. Weiterhin kann dies erreicht werden indem die Krümmungsänderung nach $\varphi$ zwischen den einzelnen Haupt- und oder Nebenrichtungen unterschiedlich ist oder unterschiedlich ungleichmäßig ist. Bei geeigneter Anzahl von Haupt- und Nebenrichtungen und den entsprechenden Längen lässt sich eine ein- oder mehr zählige Anzahl von Positioniermöglichkeiten hervorrufen die nicht mit der Anzahl von Haupt- und Nebenrichtungen übereinstimmen muss, aber trotzdem ein Form- und Kraftschluss besitzt. Hierbei ist aber zu beachten dass bei einer Positionierungsmöglichkeit, die keinen Formschluss besitzt, dass beim Fixieren des Aufbauteils mit dem Pfostenteil z. B. mit einer Schraube die Gefahr besteht, dass entweder das Aufbauteil oder das Pfostenteil beschädigt wird. Dies könnte dazu führen, dass das Pfostenteil aus dem Kiefer des Patienten explantiert werden muss.

Für die Herleitung der Formel zur Berechnung der Hubhöhe ΔH in Abhängigkeit des Verdrehwinkels ω werden die folgenden Formeln zu Grunde gelegt.

Die lineare Exzentrizität e einer Ellipse (Abb. 3) ist definiert durch:

$$e = \sqrt{R^2 - r^2}$$

Aus der linearen Exzentrizität lässt sich mit der folgenden Formel die numerische Exzentrizität $\varepsilon$ berechnen

$$\varepsilon = \frac{e}{R}$$

Zur Berechnung des variierenden Radius $\Delta r_{(\varphi)}$ wird der Winkel $\varphi$ (Abb. 3) eingeführt und dessen Werte müssen im Bogenmaß eingegeben werden. Die Umrechnung von $\varphi$ [°] in $\varphi$ [Bogenmaß] erfolgt durch die folgende Formel:

$$\varphi = \varphi * \frac{\pi}{180°}$$

Die Ellipsengleichung $\Delta r_{(\varphi)}$ (Polarkoordinaten) ist durch die folgende Gleichung gegeben:

$$\Delta R(\varphi) = \frac{r}{\sqrt{1 - \varepsilon^2 * \cos^2(\varphi)}}$$

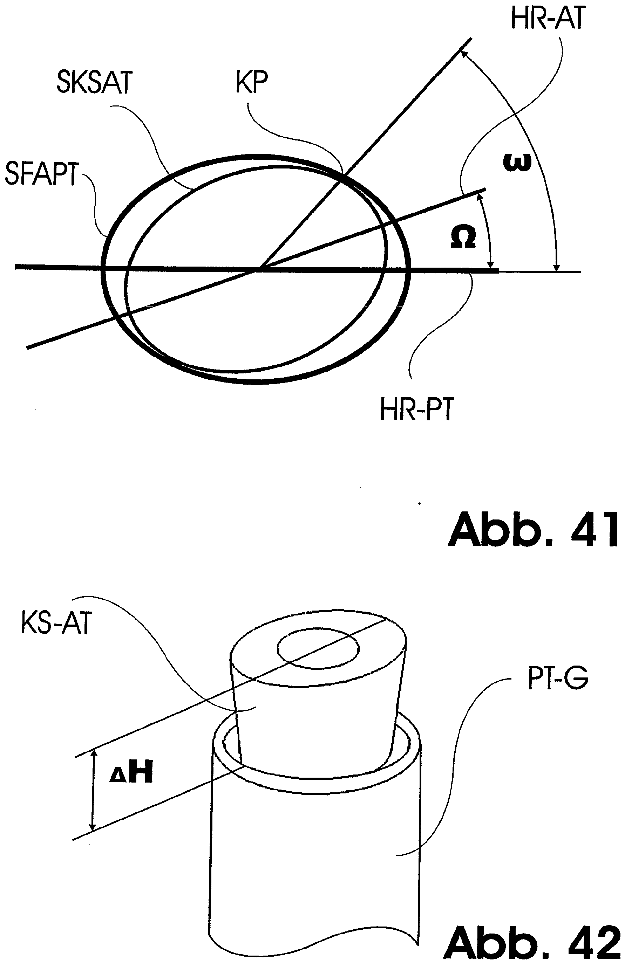

Wird der an das Aufbauteil angeformte, in diesem Beispiel konische Kontaktstift in die ebenfalls konische und in der Geometrie auf den Kontaktstift angepasste Formausnehmung im Pfostenteil eingesetzt, kann es nur zu einem Formschluss und flächigen Kontakt der konischen Flächen kommen, wenn die Hauptrichtungen des Kontaktstifts und Hauptrichtungen der Formausnehmung parallel sind (somit sind auch die Nebenrichtungen des Kontaktstifts parallel zu den Nebenrichtungen der Formausnehmung) und die Achsen des Kontaktstifts und der Formausnehmung axial aufeinander ausgerichtet sind. In diesem Fall kann der Kontaktstift am tiefsten in die Formausnehmung eindringen und es kann ein flächiger Kontakt zwischen beiden erreicht werden. Bleibt die axiale Ausrichtung, werden aber die Haupt- und Nebenrichtungen des Kontaktstifts zu den Haupt- und Nebenrichtungen der Formausnehmung gegeneinander verdreht ergibt sich der Winkel Ω (Abb. 41). Zwischen dem Kontaktstift und der Formausnehmung entstehen bei exakt gleichen Konuswinkeln von dem Kontaktstift und der Formausnehmung zwei linienförmige Kontakte. Besteht fertigungsbedingt eine kleine Konuswinkeldifferenz entstehen zwei Kontaktpunkte oder ein Kontaktpunkt und eine Kontaktlinie. Allerdings dringt der Kontaktstift bei $\Omega \neq 0$ nicht mehr so tief in die Formausnehmung ein als wenn $\Omega$ gleich null ist. Die Differenz zwischen der maximalen Eindringtiefe bei $\Omega = 0$ und der tatsächlichen Eindringtiefe bei $\Omega \neq 0$ bzw. $\Omega > 0$ und $\Omega \leq 90°$ ergibt die Hubhöhe $\Delta H$..

Bei Geometrien mit mehr als zwei Haupt- und Nabenrichtungen ergibt sich bei gleicher Anzahl und im gleichen Winkel zueinander stehenden Haupt- und Nebenachsen eine maximale Hubhöhe $\Delta H$ bei

$$\Omega = \frac{360°}{2 * \lambda}$$

mit $\lambda$ = Anzahl der Hauptrichtungen bzw. Anzahl der Nebenrichtungen.

In Abb. 41 ist deutlich zu erkennen, dass bei einer elliptischen Geometrie der Verdrehwinkel $\Omega$ zwischen den Hauptrichtungen des Kontaktstifts und der Formausnehmung nicht der gleiche Winkel ist, wie der Kontaktwinkel $\omega$ zwischen der Hauptrichtung der Formausnehmung und des Kontaktpunktes des Kontaktstifts und des Pfostenteils. Nur bei dem Verdrehwinkel $\Omega = 90°$ ergibt sich auch für $\omega$ ein Winkel von $90°$.

Die Hubhöhe $\Delta H$ in Abhängigkeit des Kontaktwinkels $\omega$ kann wie folgt berechnet werden.

Die Umrechnung von $\omega$ [°] in $\omega$ [Bogenmaß] erfolgt durch die folgende Formel:

$$\omega = \omega * \frac{\pi}{180°}$$

Für die Hubhöhe $\Delta H$ ist die Differenz zwischen R und der sich an der Kontaktstelle zwischen Kantaktstift und Formausnehmung ergebende Radius $\Delta r_{(\omega)}$ entscheidend. Diese Radiusdifferenz $\Psi$ wird mit der folgenden Formel beschrieben.

$$\Delta r_{(\omega)} = \frac{d}{\sqrt{1 - \varepsilon^2 * \cos^2(\omega)}}$$

$$\psi = Do - \Delta r_{(\omega)}$$

Mit der Radiusdifferenz $\Psi$ und dem Konuswinkel $\beta$ des Kontaktstiftes bzw. der Formausnehmung (Abb. 4) kann mit der folgenden Formel die Hubhöhe $\Delta H$ berechnet werden.

$$\Delta H = \frac{\psi}{\tan(\beta)}$$

Im folgenden Diagramm ist der Verlauf der Hubhöhe $\Delta H$ in Abhängigkeit des Kontaktwinkels $\omega$ = (0°-90°) und den Parametern Do = 3,1 mm, do = 2,8 mm und Konuswinkel $\beta$ = 6° dargestellt.

**Hubhöhe ΔH des Aufbauteils mit einem elliptischen angeformten Kontaktstift in einer elliptisch angepassten Formausnehmung im Pfostenteil bei einem rotatorischen Kontaktwinkelversatz ω um die Achse des angeformten Kontaktstifts**

Durch die Kombination einer kurzen Kontaktstelle zwischen Pfostenteil und Aufbauteil, in Form eines an das Aufbauteil angeformten ovalen und konischen Kontaktstifts in Form einer Patrize und einer dementsprechend geformten Formausnehmung im Pfostenteil ergeben sich weitere für die klinische Anwendung entscheidende Vorteile. Eine derart geformte Verbindung vereint eine dichte Ankopplungsstelle, eine hohe Rotationsfestigkeit und eine hohe Festigkeit gegenüber axialen und extraaxialen Kräften, Momenten und Biegemomenten auf sehr kurzer Bauhöhe und ohne über die Länge der gemeinsamen Kontaktstelle zwischen Pfostenteil und Aufbauteil, abgesehen von der konischen Neigung, seine Form bzw. äußere Gestalt zu verändern.

Speziell bei der Abformung ergibt sich gegenüber herkömmlichen Konusverbindungen ein entscheidender Vorteil. Übliche Konusverbindungen haben beginnen vom oberen Bereich des Pfostenteil nach apikal zuerst den konischen Bereich zur Abdichtung, Übertragung der axialen und extraaxialen Kräfte und zur Hemmung der Momente um die Pfostenteilachse. Unterhalb davon ist häufig zusätzlich das Rotationsgeperre angebracht, welches zusätzlich als Indizierung zur Übertragung der rotatorischen Ausrichtung des Pfostenteils dient. Muss bei einem solchen Pfostenteil eine Abformung inklusive der rotatorischen Ausrichtung durchgeführt werden ist es notwendig die rotatorische Ausrichtung sehr tief im Pfostenteil zu erfassen. Dies erschwert die Abformung bei stark zu einander abgewinkelten Pfostenteilen im Patientenmund. Bei einer Abformtechnik werden die Abdruckpfosten inklusive der Abformmasse entnommen. Je kürzer die Abformpfosten in das Pfostenteil eingreifen desto einfacher ist die Entnahme des Abdrucks inklusive der Abformpfosten. Hieraus ergibt sich bei der Gestaltung einer konischen Dichtfläche inklusive der Indizierung der Vorteil, dass die Abformpfosten weniger als 2 mm, vorteilhafter weise weniger als 1,5 mm und in einer besonders günstigen Variante weniger als 1 mm tief in das Pfostenteil eingreifen müssen.

Zu Verbesserung der rotatorischen Ausrichtung des Aufbauteils zu dem Pfostenteil ist es sinnvoll die Oberflächeneigenschaften der Kontaktstellen zu modifizieren. Die Verringerung der Gleitreibung steht hierbei im Vordergrund. Es ist vorteilhaft mindestens eine in einem günstigen Fall zwei und im Optimum alle drei der folgenden Flächen zu modifizieren. Die Kontaktfläche zwischen Pfostenteil und Aufbauteil, pfostenteilseitig, aufbauteilseitig und den Sitz der Verbindungsschraube im Aufbauteil. Folgende Verfahren zeigen einen positiven Effekt. Polieren, anodisieren, Anodisierung Typ II, Titannitridbeschichtung, Beschichtung mit monokristallinem und oder polykristallinen Kohlenstoff bzw. Diamant.

Bezugszeichenliste

| 1 | Dentalimplantat |
| 2 | Pfostenteil |
| 4 | Aufbauteil |

| | | |
|---|---|---|
| 6 | Gewinde | |
| 8 | Kontaktstift | |
| 10 | Formausnehmung | |
| 12 | Verbindungsschraube | |
| 14 | Außengewinde | |
| 16 | Innengewinde | |
| 18 | Schraubenkopf | |
| 20,22 | Pfeil | |

| | |
|---|---|
| D | maximaler Durchmesser |
| d | minimaler Durchmesser |
| h | Konuslänge des Kontaktstifts am Aufbauteil |
| $\Delta H$ | Hubhöhe des Aufbauteils durch das Verdrehen im Postenteil um den Winkel $\omega$ |
| D | maximaler Durchmesser |
| d | minimaler Durchmesser |
| Da | maximaler apikaler Durchmesser |
| da | minimaler apikaler Durchmesser |
| Do | maximaler okklusaler Durchmesser |
| do | minimaler okklusaler Durchmesser |
| R | maximaler Radius |
| r | minimaler Radius |
| $\Delta r$ | variabler Radius und Abhängigkeit des Winkels $\varphi$ (z. B. bei einer Ellipse) |
| HR | Hauptrichtung |
| NR | Nebenrichtung |
| HR-1 - HR-6 | Hauptrichtung 1 bis Hauptrichtung 6 |
| NR-1 - NR-6 | Nebenrichtung 1 bis Nebenrichtung 6 |
| $\theta$ | Winkel zwischen einer Haupt- und einer Nebenrichtung |
| $\theta 1 - \theta 3$ | Winkel zwischen einer Haupt- und einer Nebenrichtung 1-3 |
| HRL | Hauptrichtungslänge |
| NRL | Nebenrichtungslänge |
| HRL-1 - HRL-2 | Hauptrichtungslänge 1 und Hauptrichtungslänge 6 |
| NRL-1 - NRL-2 | Nebenrichtungslänge 1 und Nebenrichtungslänge 6 |
| $\varphi$ | Winkel zwischen einer Hauptrichtung bzw. Hauptrichtung und dem variablen Radius r z. B. bei einer Ellipse |
| $\omega$ | Rotationsversatzwinkel zwischen dem Aufbauteil und dem Pfostenteil |
| $\beta$ | Konuswinkel des an das Aufbauteil angeformten Kontaktstifts bzw. Konuswinkel der in das Pfostenteil eingebrachten Formausnehmung |
| $\Omega$ | Verdrehwinkel zwischen den Hauptrichtungen des elliptisch , konischen Kontaktstifte und der elliptischen, konischen Hauptrichtung der Formausnehmung |
| $\omega$ | Winkel zwischen einer Hauptrichtung der Formausnehmung und des Kontaktes der sich bei einem Verdrehwinkel $\Omega$ zwischen dem Kantaktstift und der Formausnehmung ergibt. |
| SKSAT | Schnittgeometrie eines elliptischen Kontaktstifts eines Aufbauteils |
| SFAPT | Schnittgeometrie einer elliptischen Formausnehmung im Pfostenteil |
| KP | Kontaktpunkt |
| HR-AT | Hauptrichtung des Aufbauteils |
| HR-PT | Hauptrichtung des Pfostenteils |
| KS-AT | Kontaktstift eines Aufbauteils |
| PT-G | Pfostenteil ohne Außengewinde |
| X | X-Achse |
| Y | Y-Achse |
| $F_1 - F_2$ | feste Punkte 1 und 2 |
| $P_{(x, y)}$ | Punkt / Punkte die durch x und y Koordinaten gebildet werden |
| $S_1 - S_2$ | Entfernung zwischen $F_1$ und $P_{(x, y)}$ bzw. Entfernung zwischen $F_1$ und $P_{(x, y)}$ |

**Patentansprüche**

1.  Aufbauteil (4) für ein Dentalimplantat (1) mit einem angeformten Kontaktstift (8), der in eine zugeordnete Formausnehmung (10) in einem Pfostenteil (2) einbringbar ist, der seinem freien Ende zu sich verjüngend ausgeführt ist, und dessen Querschnitt mindestens drei Hauptrichtungen aufweist, in denen der Halbmesser jeweils einen relativen Maximalwert einnimmt, wobei die Außenkontur des Querschnitts derart gewählt ist, dass sie an jedem Punkt genau eine Tangente aufweist, von jeder beliebigen Geraden höchstens in zwei Punkten geschnitten wird und in den Bereichen zwischen jeweils zwei Hauptrichtungen einem Ovalsegment entspricht.

2. Aufbauteil (4) nach Anspruch 1, dessen Kontaktstift (8) einen triovalen Querschnitt aufweist.

3. Dentalimplantat (1) mit einem Aufbauteil (4) nach Anspruch 1 oder 2, und mit einem Pfostenteil (2) zur Einbringung in den Kierferknochen eines Patienten, mit einer Formausnehmung (10), in die der Kontaktstift (8) des Aufbauteils (4) einbringbar ist, die ihrem freien Ende zu sich erweiternd ausgeführt ist, und deren Querschnitt mindestens drei Hauptrichtungen aufweist, in denen der Halbmesser jeweils einen relativen Maximalwert einnimmt, wobei die Außenkontur des Querschnitts derart gewählt ist, dass sie an jedem Punkt genau eine Tangente aufweist, von jeder beliebigen Geraden höchstens in zwei Punkten geschnitten wird und in den Bereichen zwischen jeweils zwei Hauptrichtungen einem Ovalsegment entspricht.

4. Dentalimplantat (1) nach Anspruch 3, bei dem die Formausnehmung (10) des Pfostenteils (2) einen triovalen Querschnitt aufweist.

5. Dentalimplantat (1) nach Anspruch 3 oder 4, dessen Aufbauteil (4) über eine Verbindungsschraube (12) an das Pfostenteil (2) montiert ist.

6. Dentalimplantat (1) nach Anspruch 5, bei dem die Konturen der Querschnitte des Kontaktstifts (8) und der Formausnehmung (10), deren Verjüngungswinkel sowie die Länge der Verbindungsschraube (12) derart gewählt sind, dass bei einer verdrehten Positionierung des Aufbauteils (4) relativ zum Pfostenteil (2) um einen Verdrehungswinkel von etwa 360°/(2*Anzahl der Positionierungsmöglichkeiten) das Gewinde (14) der Verbindungsschraube (12) nicht in das Gewinde (16) im Pfostenteil (2) eingreift.

## Claims

1. Abutment (4) for a dental implant (1) with a moulded-on contact pin (8) which can be introduced in an assigned shaped recess (10) in a post part (2) which tapers toward its free end, and the cross-section of which comprises at least three main directions, in which the radius in each case assumes a relative maximum value, wherein the outer contour of the cross-section is selected in such a way that at each point it comprises precisely one tangent, is intersected at at most two points by any straight line, and in the areas between two main directions equates to an oval segment.

2. Abutment (4) according to claim 1, the contact pin (8) of which has a tri-oval cross-section.

3. Dental implant (1) with an abutment (4) according to claim 1 or 2 and with a post part (2) for incorporation into the jawbone of a patient, with a shaped recess (10), into which the contact pin (8) of the abutment (4) can inserted, which widens towards its free end and the cross-section of which has three main directions, in which the radius in each case assumes a relative maximum value. wherein the outer contour is selected in such a way that at each point it comprises precisely one tangent, is intersected at at most two points by any straight line, and in the areas between two main directions equates to an oval segment.

4. Dental implant (1) according to claim 3, in which the shaped recess (10) of the post part (2) has a tri-oval cross-section.

5. Dental implant (1) according to claim 3 or 4, the abutment (4) of which is mounted on the post part (2) by means of a connecting screw (12).

6. Dental implant (1) according to claim 5, in which the contours of the cross-sections of the contact pin (8) and of the shaped recess (10), their tapering angle as well as the length of the connecting screw (12) are selected in such a way that in the case of twisted positioning of the abutment (4) relative to the post part (2) by a twisting angle of around 360°/(2* number of positioning possibilities), the thread (14) of the connecting screw (12) does not engage in the thread (16) in the post part (2).

**Revendications**

1. Pilier (4) pour un implant dentaire (1) comprenant une tige de contact (8) moulée qui peut être insérée dans un évidement moulé (10) correspondant dans une partie de tige (2) qui est conçue en se rétrécissant vers son extrémité libre et dont la section présente au moins trois directions principales dans lesquelles le rayon prend une valeur maximale relative, dans lequel le contour extérieur de la section est choisi de telle façon qu'il présente en tout point précisément une tangente, est coupé au plus en deux points par toute droite quelconque et correspond à un segment d'ovale dans les zones entre respectivement deux directions principales.

2. Pilier (4) selon la revendication 1, dont la tige de contact (8) présente une section tri-ovale.

3. Implant dentaire (1) comprenant un pilier (4) selon la revendication 1 ou 2, et comprenant une partie de tige (2) pour l'insertion dans l'os de la mâchoire d'un patient, comprenant un évidement moulé (10) dans lequel la tige de contact (8) du pilier (4) peut être insérée, qui est conçu en se rétrécissant vers son extrémité libre et dont la section présente au moins trois directions principales dans lesquelles le rayon prend une valeur maximale relative, dans lequel le contour extérieur de la section est choisi de telle façon qu'il présente en tout point précisément une tangente, est coupé au plus en deux points par toute droite quelconque et correspond à un segment d'ovale dans les zones entre respectivement deux directions principales.

4. Implant dentaire (1) selon la revendication 3, dans lequel l'évidement moulé (10) de la partie de tige (2) présente une section tri-ovale.

5. Implant dentaire (1) selon la revendication 3 ou 4, dont le pilier (4) est monté sur la partie de tige (2) par une vis de liaison (12).

6. Implant dentaire (1) selon la revendication 5 dans lequel les contours des sections de la tige de contact (8) et de l'évidement moulé (10), leurs angles de rétrécissement ainsi que la longueur de la tige de liaison (12) sont ainsi choisis que si le pilier (4) est positionné en vrille par rapport à la partie de tige (2) d'un angle de rotation d'environ 360°/(2*nombre des possibilités de positionnement), le filet (14) de la vis de liaison (12) ne se met pas en prise dans le filet (16) dans la partie de tige (2).

**Abb. 1**

**Abb. 2**

**Abb. 3**

**Abb. 4**

Abb. 5

Abb. 6

Abb. 7

Abb. 8

Abb. 9

Abb. 10

**Abb. 11**

**Abb. 12**

Abb. 13

Abb. 14

**Abb. 15**

**Abb. 16**

Abb. 17

Abb. 18

Abb. 19

Abb. 20

Abb. 21

Abb. 22

Abb. 23

Abb. 24

θ

HRL

θ

NRL

θ

θ

HR

θ

θ

NR

**Abb. 25**

**Abb. 26**

**Abb. 27**

**Abb. 28**

**Abb. 29**

**Abb. 30**

Abb. 31

Abb. 32

**Abb. 33**

**Abb. 34**

Abb. 35

Abb. 36

Abb. 37

Abb. 38

NR-1

HRL-1    HRL-2

NRL-1

$\boldsymbol{\Delta}$r

$\boldsymbol{\varphi}$

NRL-2

HR-1    NR-2    HR-2

## Abb. 39

## Abb. 40

**Abb. 41**

**Abb. 42**

**Abb. 43**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005008273
- DE 102006018726